(19) Europäisches Patentamt
European Patent Office
Office européen des brevets

(11) EP 0 787 750 B1

(12) EUROPÄISCHE PATENTSCHRIFT

(45) Veröffentlichungstag und Bekanntmachung des Hinweises auf die Patenterteilung:
**14.05.2003 Patentblatt 2003/20**

(21) Anmeldenummer: **97100710.9**

(22) Anmeldetag: **17.01.1997**

(51) Int Cl.[7]: **C08F 210/00**, C08K 3/00, C08K 3/28, C08K 3/30, C08K 3/32, C08F 8/50, C08J 3/24, C08J 5/18, C09D 123/00, C08J 9/00, C08F 255/00

# (54) Strukturisomere Poly(alkylethylene)

Poly(alkylethylene) structural isomers

Isomères structurels de poly(alkyléthylènes)

(84) Benannte Vertragsstaaten:
**AT BE CH DE DK ES FR GB IT LI NL SE**

(30) Priorität: **01.02.1996 DE 19603600**
**01.02.1996 DE 19603439**
**01.02.1996 DE 19603438**

(43) Veröffentlichungstag der Anmeldung:
**06.08.1997 Patentblatt 1997/32**

(73) Patentinhaber: **Borealis GmbH**
**2323 Schwechat-Mannswörth (AT)**

(72) Erfinder:
- **Rätzsch, Manfred, Prof. Dr.**
  **4202 Kirchschlag (AT)**
- **Hesse, Achim, Dr.**
  **4020 Linz (AT)**
- **Bucka, Hartmut**
  **4622 Eggendorf (AT)**
- **Reichelt, Norbert, Dr.**
  **4501 Neuhofen (AT)**
- **Panzer, Ulf, Dr.**
  **4320 Perg (AT)**
- **Bühler, Konrad, Dr.**
  **06618 Pödelist (AT)**

(74) Vertreter: **Schinke, Herbert, Dr. Dr.,**
**Patentanwaltskanzlei**
**Postfach 11 11**
**06234 Leuna (DE)**

(56) Entgegenhaltungen:
**EP-A- 0 190 889**
**EP-A- 0 437 808**
**EP-A- 0 612 773**
**EP-A- 0 659 784**
**US-A- 4 001 172**
**US-A- 5 578 682**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 787 750 B1

Printed by Jouve, 75001 PARIS (FR)

## Beschreibung

Im Gegensatz zu Polyethylen besitzen Poly(alkylethylene) bei der thermoplastischen Verarbeitung eine Reihe von Nachteilen wie eine erhöhte Instabilität der Schmelze und dem damit verbundenen kleineren Verarbeitungsfenster. Nichtmodifizierte Poly(alkylethylene) lassen gegenüber Polyethylen nur eine bedeutend niedrigere Verarbeitungsgeschwindigkeit zu.

Poly(ethylethylene) verbesserter Verarbeitbarkeit werden durch Synthese von Poly(ethylethylen-co-ethylen) -Copolymeren (Natta, G , J.Polymer Sci.51(1961), 387 - 398; Chim.Ind.(Milano) 41 (1959), 764 ; Yu, T., J.Plastic Film Sheeting 10(1994)1, 539 - 564 ) sowie durch Pfropfung mit Styren, Vinylchlorid [Natta, Polymer Sci. 34 (1959), 685-698 ] oder Acrylnitril (U.S. 3141862 ) erzielt. Günstigere Verarbeitungseigenschaften besitzen ebenfalls Blends Poly(ethylethylen)/ Polyethylen (Hwo, C., J.Plast.Film Sheeting 3(1987), 245-260 ; Kishore, K., Polymer 27(1986), 337 - 343 ).

Weiterhin ist bekannt, die Instabilität von Poly(methylethylen)-Schmelzen durch Zusätze von Polyethylen (Ramsteiner, F., Polymer 24(1983), 365-370 ), Polyethylen/Poly(ethylen-co-methylethylen)-Mischungen (Wasiak,A., ANTEC 1992, 1265-1266 ) oder Poly(ethylen-co-acetoxyethylen) (Gupta, A., J.appl.Polymer Sci. 46(1992), 281-293 ) herabzusetzen. Eine Vergrößerung des Verarbeitungsfensters von Poly(methylethylen) wird ebenfalls durch Behandlung des Pulvers in fester Phase mit ionisierender Strahlung ( EP 190889), Peroxiden (EP 384431) oder Monomer/ Peroxid-Mischungen (EP 437808) bewirkt. Eine Behandlung von Poly(methylethylen)/Polyethylen-Schmelzen mit Peroxiden (Xanthos, M., Adv.Polym. Techn. 11(1992)4, 295 - 304) ist ebenfalls bekannt.

Bekannte Verfahren zur Herabsetzung der Schmelzeinstabilität von Poly(isobutylethylen) sind die Synthese von Poly(isobutylethylen-co-ethylen)-Copolymeren (Yu,T., J. Plast. Film Sheeting 10 (1994)1, 539-564 ) , poly(isobutylethylen-co-hexylethylen)-Copolymeren und Poly(iso-butylethylen-cohexadecylethylen)-Copolymeren (Campbell, J. appl. Polymer Sci. 5(1961)4, 184 - 190; Hambling, J. Rubber Plast. Age 49(1968) 3, 224,227), von Poly(isobutylethylen-cophenylethylen)-Copolymeren (Krenzel, V., Plast.Massy (1972)3, 57-59, Kissin, Y., Eur.Polymer J.8 (1972)3, 487-499) sowie die Synthese von Poly(isobutylethylen-g-phenylethylen)-Pfropfcopolymeren (Wilson, J., J. macromol. Sci. A6 (1972) 2, 391 - 402).

Bekannt ist ebenfalls die Vernetzung von Poly(methylethylen-co-ethylen), Poly(methylethylen) sowie von Poly (acetylethylen-co-ethylen) durch Bestrahlung zur Erhöhung der Wärmeformbeständigkeit und des Moduls (N. Brooks, J. Irradiation Techn. 1(1983)3, 237-257). Weiterhin liegen Untersuchungen zur Sorption von Monomeren in pulverförmigen Poly(alkylethylenen) vor [Rätzsch, M., Angew. Makromol. Chemie 229 (1995), 145-158].

Bekannt ist weiterhin, Polyolefine in der Schmelze im Extruder (EP 0 612 773; EP 0 659 784) mit ungesättigten Monomeren zu Pfropfcopolymeren umzusetzen. Diese Pfropfcopolymere besitzen jedoch keine verbesserten Schmelzeverarbeitungseigenschaften.

Von Nachteil bei diesen Verfahren ist, dass die günstigen Werkstoffeigenschaften von Poly(alkylethylenen) wie Wärmeformbeständigkeit, Transparenz und Modul durch den hohen Anteil der Modifizierungskomponenten bei Copolymerisation, Pfropfung und Legierung herabgesetzt werden.

Der Erfindung liegt daher das Problem zugrunde, die Verarbeitungseigenschaften von Poly(alkylethylenen) unter Erhalt der günstigen Werkstoffeigenschaften der Poly(alkylerthylene) zu verbessern. Dieses Problem wurde überraschenderweise durch Strukturisomerisierung von Poly(alkylethylenen) gelöst, bei der Poly(alkylethylene) unterschiedlicher Kettenlänge durch polymere Brückensegmente zu strukturisomeren Poly(alkylethylenen) mit H- und Y-Struktur verknüpft werden.

Für eine Charakterisierung des Verarbeitungsverhaltens von Poly(alkylethylenen) hat sich der ψ - Index als geeignetes Kriterium erwiesen:

$$\psi = Tm\ \Delta Hm\ \beta\ \zeta\ Tg^{-1}\ \text{(kJ/mol grd)}$$

Tm = Schmelztemperatur (K)
ΔHm = Schmelzwärme (kJ/mol)
β = linearer thermischer Ausdehnungskoeffizient bei 25 °C (1/grd)
ζ = Schwellwert
Tg = Glastemperatur (K)

Der Schwellwert ist ein zur Charakterisierung des Verarbeitungsverhaltens von Polyolefinen und Polyolefinmischungen für das spezielle Polyolefin üblicher Parameter (WO 94 05 707, WO 97 49 759, JP 97 255 816). Eine allgemeine Normierung für Polyolefine erfolgt durch Einbeziehung der für das spezielle Polyolefin relevanten thermischen Daten, Schmelztemperatur, Glastemperatur, Schmelzwärme und Ausdehnungskoeffizient.

Die Ermittlung der Schmelztemperatur Tm(K) und Schmelzwärme ΔHm (kJ/mol) erfolgt nach DIN 51004 oder

ISO 3146. Der lineare thermische Ausdehnungskoeffizient β (1 / grd) bei 25°C wird nach DIN 53752 bestimmt. Der Schwellwert ζ wird bei der MFI-Bestimmung nach ISO1131 durch Ermittlung des Strangdurchmessers des hergestellten strukturisomeren Polyalkylethylens $d_I$ (mm) sowie des Strangdurchmessers des nichtmodifizierten Polyalkylethylen-Ausgangsprodukts $d_A$ (mm) und Quotientenbildung $d_I/ d_A$ bestimmt. Für die Glastemperatur Tg(K) erfolgt die Bestimmung nach DIN 61006.

Für die Ausgangsprodukte (nichtmodifizierte Polyalkylethylene) können Schmelztemperatur, Glastemperatur , Schmelzwärme und linearer thermischer Ausdehnungskoeffizient β aus Tabellenwerken wie Brandrup-Immergut "Polymer Handbook", John Wiley&Sons, New York 1989 (ISBN 0-471-81244-7) entnommen werden.

Erfindungsgemäß besitzen Poly(alkylethylene) mit H- und Y-Struktur und einem ψ - Index von $2 \cdot 10^{-3}$ bis $8 . 10^{-3}$ (kJ/mol grd) bedeutend günstigere Verarbeitungseigenschaften gegenüber nichtmodifizierten Poly(alkylethylenen). So liegt der ψ-Wert für Poly(isobutylethylen) bei etwa $1{,}88 \cdot 10^{-3}$ ( kJ/mol grd) und für Poly(ethylethylen) bei etwa $1{,}84 \cdot 10^{-3}$ (kJ/mol grd).

Poly(alkylethylene) mit H - Struktur sind Makromere der Struktur

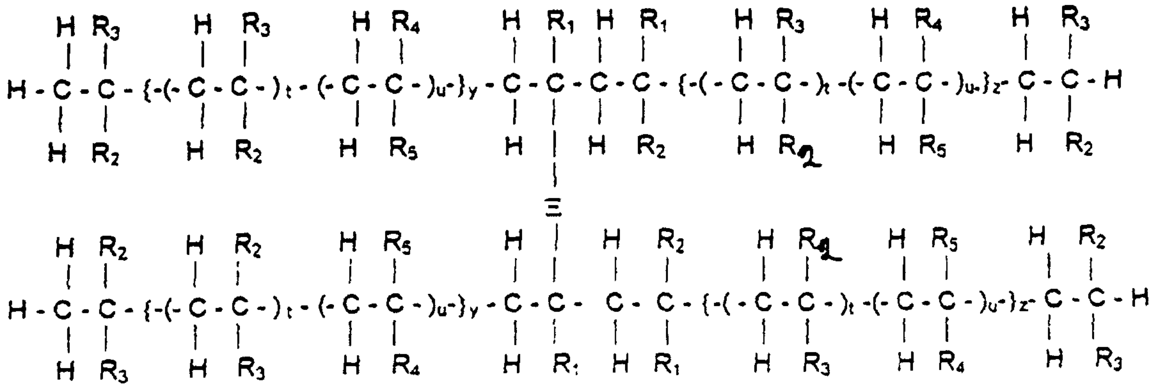

$R_1 = C_1$ bis $C_4$-Alkyl; $R_2$ = H; t/u = 0,03 bis 30; $R_3 = C_1$ bis $C_4$-Alkyl oder H; $R_4$ =H, $C_1$ bis $C_4$-Alkyl,Halogen oder Aryl, insbesondere Phenyl; $R_5$ = H oder $C_1$ bis $C_4$-Alkyl; y+z = 150 bis 3000

Ξ = Polymere Brückensegmente auf Basis von Acrylsäure, $C_4$- bis $C_{12}$-Acrylsäurederivaten, $C_3$- bis $C_{21}$-Allylverbindungen, $C_8$- bis $C_{14}$-Diacrylaten, $C_7$- bis $C_{16}$-Diallylverbindungen, $C_4$- bis $C_{10}$-Dienen, C9- bis $C_{15}$-Dimethacrylaten, $C_7$- bis $C_{10}$-Divinylverbindungen, Monovinylverbindungen, ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexyether, Vinylethylketon, Vinylformat, Vinylfuran, Vinylhexyether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat, Vinyltriethoxysilan, Vinyltrimethoxysilan, Vinyltris(trimethoxysiloxy)silan, Vinylmethylsilan; $C_{12}$- bis $C_{17}$-Polyacrylaten, $C_{15}$- bis $C_{21}$-Polymethacrylaten, $C_9$- bis $C_{12}$-Triallylverbindungen und/oder Makromere auf Basis von Oligobutadienen, Polysiloxanen und/oder Polyethern.

Poly(alkylethylene) mit Y- Struktur sind Makromere der Struktur

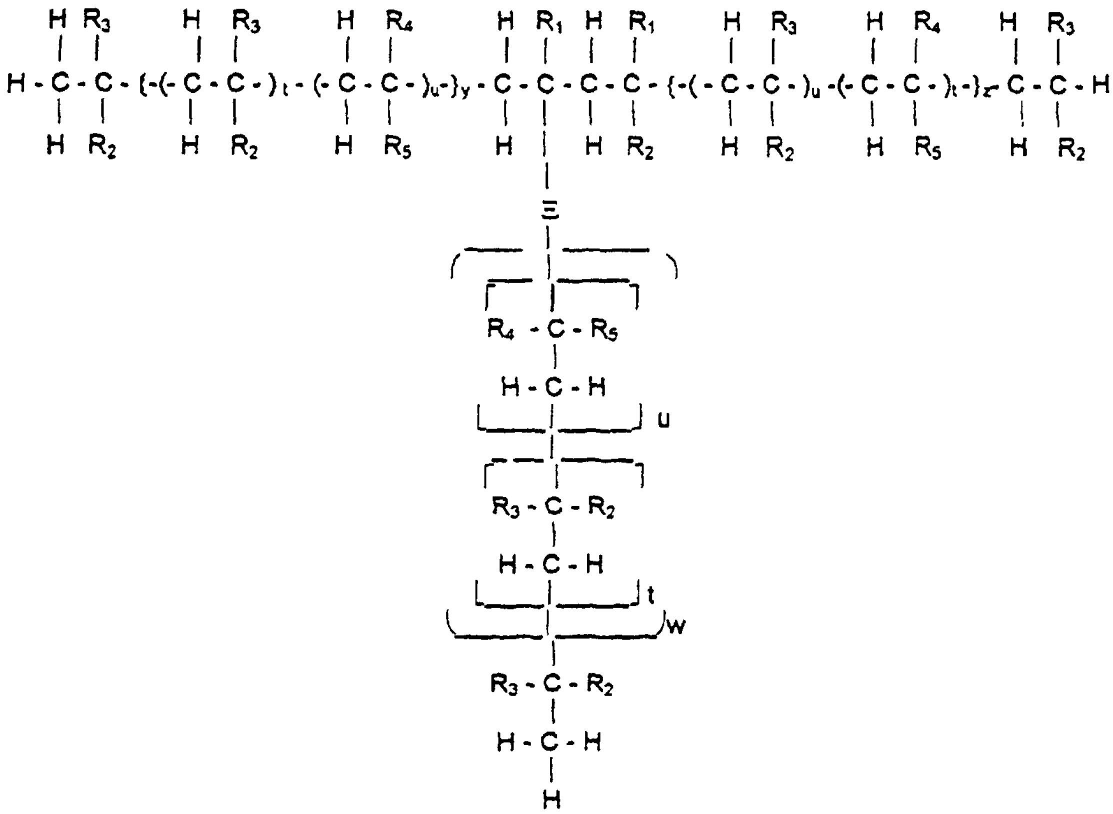

$R_1 = C_1$ bis $C_4$-Alkyl; $R_2$ = H; $R_3 = C_1$ bis $C_4$-Alkyl oder H; $R_4$ = H, C, bis $C_4$-Alkyl, Halogen oder Aryl, insbesondere Phenyl; $R_5$ = H oder $C_1$ bis $C_4$-Alkyl; y + z = 150 bis 3000; t/u = 0,03 bis 30; w = 250 bis 5000

Ξ = Polymere Brückensegmente Basis von Acrylsäure, $C_4$- bis $C_{12}$-Acrylsäurederivaten, $C_3$- bis $C_{21}$-Allylverbindungen, $C_8$- bis $C_{14}$-Diacrylaten, $C_7$- bis $C_{16}$-Diallylverbindungen, $C_4$- bis $C_{10}$-Dienen, $C_9$- bis $C_{15}$-Dimethacrylaten, $C_7$- bis $C_{10}$-Divinylverbindungen, Monovinylverbindungen ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexyether, Vinylethylketon, Vinylformat, Vinylfuran, Vinylhexyether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat, Vinyltriethoxysilan, Vinyltrimethoxysilan, Vinyltris(trimethoxysiloxy) silan, Vinylmethylsilan; $C_{12}$- bis C17-Polyacrylaten, $C_{15}$- bis $C_{21}$-Polymethacrylaten, $C_9$- bis $C_{12}$-Triallylverbindungen und/oder Makromere auf Basis von Oligobutadienen, Polysiloxanen und/oder Polyethern.

Der Anteil der polymeren Brückenglieder in den Poly(alkylethylenen) mit H- und Y-Struktur beträgt 0,1 bis 5 Masse%.

Durch die Strukturisomerisierung von Poly(alkylethylenen) zu strukturisomeren Poly(alkylethylenen) mit H- und Y-Struktur wird eine Kettenanordnung in der Schmelze erzielt, die die Schmelzeinstabilität der Poly(alkylethylene) stark herabsetzt.

Bevorzugt werden Poly(alkylethy)ene) mit H- und Y-Struktur, bei denen $R_1$ und $R_3$ durch Ethyl-, Methyl- oder Isobutylgruppen, $R_2$ und $R_6$ = H und $R_4$ durch Ethyl-, n-Butyl-, Methyl- oder Isobutylgruppen bzw. H oder -Cl gebildet wird.

Die erfindungsgemäßen Eigenschaften besitzen ebenfalls Mischungen dieser strukturisomeren Poly(alkylethylene). Bevorzugte ψ-Werte liegen bei $2{,}5.10^{-3}$ bis $6.\ 10^{-3}$ (kJ/mol.grd).

Als Divinylverbindungen für die polymere Brückensegmente Ξ sind Divinylanilin, m-Divinylbenzen, p-Divinylbenzen, Diethylenglycoldivinylether, Divinylpentan, Divinylpropan und/oder 1,3-Divinyl-1,1,3,3-tetramethyldisiloxan in Anteilen von 0,1 bis 2 Masse% geeignet.

Polymere Brückensegmente Ξ auf Basis von Allylverbindungen bestehen aus Monomereinheiten wie Allylacetat, Allylacrylat, Allylalkohol, Allylbenzen, Allylbenzylether, 3-Allyl-1-buten, Allylbutylether, Allylcyanurat, Allylcyclohexan, Allyldiethylketon, 4-Allyl-2,6-dimethoxydphenol, Allyldimethylchlorsilan, Allylepoxypropylether, Allylethylether, Allylglycidylether, Allylglycidylhexylhydrophthalat, Allylglycidylphthalat, Allylheptanoat, Allylhexanoat, Allylmethacrylat, Allylmethoxyphenol, Allylmethyether, Allylmethylmaleat, Allyloxy-2,3-propandiol, N-Allylstearamid, Allyltolyether, Allyltrichlorsilan, Allyltriethoxysilan, Allyltrimethoxysilan, Allyltrimethylsilan, Allyltriphenylsilan und/oder Allylvinylether in Anteilen von 0,2 bis 4,5 Masse%, bezogen auf die erfindungsgemäßen Poly(alkylethylene) mit H- und Y-Struktur.

Geeignete Diacrylate oder Dimethacrylate für die polymeren Brückensegmente Ξ sind Ethylenglycoldiacrylat, Propylenglycoldiacrylat, Trimethylenglycoldiacrylat, Butylenglycoldiacrylat, Pentandioldiacrylat, Hexandioldiacrylat, Octandioldiacrylat, Diglycoldiacrylat und/oder Triglycoldiacrylat bzw. Dimethacrylate wie Ethylenglycoldimethacrylat, Propylenglycoldimethacrylat, Trimethylenglycoldimethacrylat, Butylenglycoldimethacrylat, Pentandioldimethacrylat, Hexandioldimethacrylat, Octandioldimethacrylat, Diglycoldimethacrylat und/oder Triglycoldimethacrylat in Anteilen von 0,1 bis 1,6 Masse%.

Als Polyacrylate für die polymeren Brückensegmente Ξ sind Glycerintriacrylat, Trimethylolpropantriacrylat und/oder Pentaerythrittetraacrylat in Anteilen von 0,1 bis 1,2 Masse% geeignet.

Neben polymeren Brückensegmenten Ξ auf Basis von Acrylsäure haben bevorzugt polymere Brückensegmente Ξ Acrylsäurederivate wie Acrylamid, Acrylnitril, Benzylacrylat, Butylacrylat, Cyclohexylacrylat, N,N-Dimethylacrylamid, Dodecylacrylat, Ethylacrylat, 2-Ethylhexylacrylat, 2-Ethoxyethylacrylat, Glycidylacrylat, Hydroxethylacrylat, Isopropylacrylat, 2-Methoxyethylacrylat, 4-Methoxybenzylacrylat, Methylacrylat, Natriumacrylat, N.-tert.butoxycarbonyl-2-aminoethylacrylat, Octylacrylat, Phenylmethylacrylat, Phenylacrylat, n-Propylacrylat und/oder Tetrahydrofurfurylacrylat in Anteilen von 0,2 bis 1,8 Masse% , bezogen auf die erfindungsgemäßen Poly(alkylethylene) mit H- und Y-Struktur, als Basis.

Als Diallylverbindungen für sind für die polymeren Brückensegmente Ξ Diallyldimethylsilan, Diallyl(2-hydroxy-3-phenoxypropyl)isocyanurat, Diallylcyanurat, Diallylcyanoethylisocyanurat, Diallylcyanamid, Diallylmaleinat, Diallylmelamin, Diallylphthalat und/oder N,N'-Diallylweinsäurediamid in Anteilen von 0,2 bis 1,8 Masse% geeignet.

Polymere Brückensegmente Ξ auf Basis von Dienen bestehen aus Monomereinheiten wie Butadien, Butadien-1-carbonsäure, Chloropren, Cyclohexadien-1,3, Cyclohexadien-1,5, Cyclopentadien, 2,3-Dimethylbutadien, 1-Ethoxybutadien, 1,4-Heptadien, 1,4-Hexadien, 1,6-Hexadien, Isopren, Norbornadien, und/oder 1,4-Pentadien in Anteilen von 0,1 bis 1,6 Masse % , bezogen auf die erfindungsgemäßen Poly(alkylethylene) mit H- und Y-Struktur.

Bevorzugte polymere Brückensegmente Ξ auf Basis von Polymethacrylaten bestehen aus Monomereinheiten wie Glycerintrimethacrylat, Trimethylolpropantrimethacrylat, und/oder Pentaerythrittetramethacrylat in Anteilen von 0,1 bis 1,2 Masse% .

Als Triallylverbindungen für polymere Brückensegmente Ξ sind Triallylcitrat, Triallylcyanurat, Triallylisocyanurat und/oder Triallylphosphin in Anteilen von 0,1 bis 1,4 Masse% geeignet.

Geeignete Makromere für polymere Brückensegmente Ξ basieren auf Oligobutadienen, Polysiloxanen und/oder Polyethern mit Acryl- , Allyl-, Isocyanat-, Oxazolin- oder Vinylendgruppen, der Masseanteil der Makromeren liegt bei 0,8 bis 5 Masse%, bezogen auf die erfindungsgemäßen Poly(alkylethylene) mit H- und Y-Struktur.

Eine verbesserte Verarbeitbarkeit gegenüber nichtmodifizierten Poly(alkylethylenen) besitzen erfindungsgemäß ebenfalls Mischungen aus 3 bis 97% von Poly(alkylethylenen) mit H- und Y-Struktur, 97 bis 3 % nichtmodifizierten Poly(alkylethylenen), 0,001 bis 2,5% Stabilisatoren und gegebenenfalls 0,1 bis 1 % Antistatika, 0,2 bis 3 % Pigmente, 0,05 bis 1 % Nukleierungsmittel, 5 bis 40 % Füllstoffe, 2 bis 20 % Flammschutzmittel und/oder 0,001 bis 1 % Verarbeitungshilfsmitteln; der $\psi$ - Index für diese Mischungen liegt bei $2 \cdot 10^{-3}$ bis $7{,}8 \cdot 10^{-3}$ (kJ/mol grd).

Als Stabilisatoren werden bevorzugt Mischungen aus 0,01 bis 0,6 Masse% phenolischen Antioxidantien, 0,01 bis 0,6% Verarbeitungsstabilisatoren auf Basis von Phosphiten , 0,01 bis 0,6 % Hochtemperaturstabilisatoren auf Basis von Disulfiden und Thioäthern und 0,01 bis 0,8 % sterisch gehinderten Aminen (HALS) eingesetzt.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl-4-hydroxyphenyl)propionsäureoctadecylester, 1,3,5-Trimethyl-2,4,6-tris(3',5'di-tert.butyl-4-hydroxybenzyl)benzen und/oder Pentaerythritoltetrakis[3-(3,5-di-tert.butyl-4-hydroxyphenyl)]propionat.

Als HALS-Verbindungen sind Bis-2,2,6,6-tetramethyl-4-piperidylsebazat und/oder Poly-([1,1,3,3,-tetramethylbutyl)-imino] -1,3,5-triazin-2,4,diyl)[2,2,6,6,-tetramethylpiperidyl)-amino]- hexamethylen-4-(2,2,6,6-tetramethyl) piperidyl)-imino] besonders geeignet.

Als Verarbeitungshilfsmittel können Calciumstearat, Magnesiumstearat und/oder Wachse eingesetzt werden.

Strukturisomere Poly(alkylethylene) werden erfindungsgemäß entweder nach einem Bestrahlungsverfahren oder nach einem Schmelzereaktionsverfahren oder nach einem Festphasenreaktionsverfahren hergestellt.

Beim Bestrahlungsverfahren werden erfindungsgemäß die pulverförmigen Mischungen aus 95 bis 99,98% Masse% Poly($C_1$- bis $C_4$-alkylethylenen) und 0,02 bis 5 Masse% Acrylsäure, Acrylsäurederivaten, Allylverbindungen, Diacrylaten, Diallylverbindungen, Dienen, Dimethacrylaten, Divinylverbindungen, Makromeren mit Acryl-, Allyl-, Isocyanat-, Oxazolin- oder Vinylendgruppen auf Basis von Oligobutadienen, Polysiloxanen oder Polyethern, Monovinylverbindungen, Polyacrylaten, Polymethacrylaten und/oder Triallylverbindungen in Wirbelschicht, bevorzugt unter inerten Bedingungen, bei 3oo bis 5oo K, gegebenenfalls in Gegenwart von zusätzlichen üblichen Hilfsstoffen, insbesondere von 0,01 bis 0,6 Masse% phenolischen Antioxidantien, 0,01 bis 0,6 Masse% Hochtemperaturstabilisatoren auf Basis von Disulfiden und Polyäthern, 0,01 bis 0,6 % Verarbeitungsstabilisatoren auf Basis von Phosphiten und/ oder 0,01 bis 0,8% sterisch gehinderten Aminen (HALS), 0,1 bis 1% Antistatika, 0,2 bis 3% Pigmenten, 0,05 bis 1% Nukleierungsmitteln, 5 bis 40% Füllstoffen, 2 bis 20% Flammschutzmitteln und/oder 0,001 bis 1% Verarbeitungshilfsmitteln

a) in einem ersten Reaktionsschritt, bevorzugt in Wirbelschichtreaktoren mit kontinuierlichem Produkteintrag und Produktaustrag, ionisierender Strahlung einer Energie von 15o bis 1oooo KeV bei einer Bestrahlungsdosis von o, 5 bis 8o KGy, insbesondere durch Nuklidbestrahlungsanlagen mit Kobalt-6o als Strahlenquellen, durch Elektronenbeschleuniger vom Cockroft-Walton-Typ mit Strahlstromenergien von 3oo bis 45oo KeV oder durch Elektronenbeschleuniger vom Linearbeschleunigertyp mit Strahlstromenergien von 1ooo bis 1oooo KeV, ausgesetzt, und

b) in einem zweiten Reaktionsschritt einer thermischen Behandlung der bestrahlten pulverförmigen Mischungen bei 38o bis 55o K , insbesondere in Extrudern bei Temperaturen im Bereich von 41o bis 55o K und bei Reaktionszeiten von 2 bis 1o Minuten oder in fester Phase bei Temperaturen im Bereich von 38o bis 5oo K bei Reaktionszeiten von 5 bis 6o Minuten, unterzogen, wobei vor der thermischen Behandlung gegebenenfalls zusätzlich übliche Stabilisatoren in Konzentrationen von o,o1 bis o,6% zugesetzt werden können.

Beim Schmelzereaktionsverfahren werden erfindungsgemäß Poly($C_1$- bis $C_4$-alkylethylene) durch ein kontinuierliches Verfahren im Extruder, bevorzugt unter inerten Bedingungen,

a) in der ersten Reaktionsstufe mit 0,01 bis 3 Masse% Acylperoxiden, Alkylperoxiden, Hydroperoxiden und/oder Perestern, die entweder im Innenmischer auf die Poly(alkylethylene) aufgetrommelt und gemeinsam dosiert werden oder als Lösung in die Poly(alkylethylen)-Schmelze in Zone 2 bis 4 des Extruders dosiert werden, zur Umsetzung gebracht, und

b) in der zweiten Reaktionsstufe mit 0,01 bis 5 Masse% Acrylsäure bzw. Acrylsäurederivaten, Allylverbindungen, Diacrylaten, Diallylverbindungen, Dienen, Dimethacrylaten, Divinylverbindungen; Makromeren mit Acryl-, Allyl-, Isocyanat-, Oxazolin- oder Vinylendgruppen auf Basis von Oligobutadienen, Polysiloxanen oder Polyethern; Monovinylverbindungen, Polyacrylaten, Polymethacrylaten und/oder Triallylverbindungen in Gegenwart von 0,001 bis 3,0 Masse% Acylperoxiden, Alkylperoxiden, Hydroperoxiden und/oder Perestern, und gegebenenfalls üblichen Hilfsstoffen, insbesondere von 0,01 bis 0,6 Masse% phenolischen Antioxidantien, 0,01 bis 0,6 Masse% Hochtemperaturstabilisatoren auf Basis von Disulfiden und Polyäthern, 0,01 bis 0,6 % Verarbeitungsstabilisatoren auf Basis von Phosphiten und/ oder 0,01 bis 0,8% sterisch gehinderten Aminen (HALS), 0,1 bis 1% Antistatika, 0,2 bis 3% Pigmenten, 0,05 bis 1% Nukleierungsmitteln, 5 bis 40% Füllstoffen, 2 bis 20% Flammschutzmitteln und/oder 0,001 bis 1% Verarbeitungshilfsmitteln bei Temperaturen von 140 bis 320 °C zur Umsetzung gebracht, wobei Radikalbildner und Monomere über getrennte Dosiereinrichtungen und/oder gemeinsam als Lösung in die Poly(alkylethylen)-Schmelze in Zone 3 bis 6 des Extruders, gegebenenfalls mit einem weiteren Poly(alkylethylen)- Anteil, dosiert werden.

Beim Festphasenreaktionsverfahren werden erfindungsgemäß nach einem kontinuierlichen Verfahren, bevorzugt unter inerten Bedingungen,

a) pulverförmige Poly($C_1$- bis $C_4$-alkylethylene) in einer ersten Verfahrensstufe bei 29o K bis 5oo K in Reaktoren mit Umwälzeinrichtungen und Kreislaufträgergasführung einer Sorption mit 0,05 bis 3 Masse% Acylperoxiden, Alkylperoxiden, Hydroperoxiden und/oder Perestern sowie 0,05 bis 5 Masse% Acrylsäure, Acrylsäurederivaten, Allylverbindungen, Diacrylaten, Diallylverbindungen, Dienen, Dimethacrylaten, Divinylverbindungen, Monovinylverbindungen, Polyacrylaten, Polymethacrylaten und /oder Triallylverbindungen, die über Verdampfungseinrichtungen in den Trägergasstrom eingebracht wurden, unterzogen, und

b) die pulverförmigen Mischungen in einer zweiten Verfahrensstufe, gegebenenfalls unter Zusatz üblicher Hilfsstoffen, insbesondere von 0,01 bis 2,5% Stabilisatoren, 0,1 bis 1% Antistatika, 0,2 bis 3% Pigmenten, 0,05 bis 1% Nukleierungsmitteln, 5 bis 40% Füllstoffen, 2 bis 20% Flammschutzmitteln und/oder 0,001 bis 1% Verarbeitungshilfsmitteln, in der Einzugszone von Schneckenmaschinen, insbesondere von Doppelschneckenextrudern oder Einschneckenextrudern mit Plungerschnecke, auf die Zerfallstemperatur des Radikalbildners erwärmt und nachfolgend bei Reaktionstemperaturen von 415 K bis 595 K aufgeschmolzen und granuliert.

Als Poly(alkylethylene) werden bevorzugt Poly(ethylethylene) mit Glastemperaturen von 242 bis 250 K und Molmassen ($M_w$ ) im Bereich von 2 $10^4$ bis $3 \cdot 10^6$, Poly(ethylethylen-co-ethylen)-Copolymere mit Ethylen-Anteilen im Copolymer von 3 bis 45 Mol %, Poly(ethylethylen-co-methylethylen)-Copolymere mit einem Methylethylen-Anteil im Copolymer von 3 bis 97 Mol %, Poly(isobutylethylene) mit Glastemperaturen von 295 bis 303 K und Dichten im Bereich von 0,813 bis 0,832 g/cm$^3$ bei 25 °C, Poly(isobutyl-ethylen-co-n-butylethylen)-Copolymere mit einem n-Butylethylenanteil von 3 bis 97 Mol %, Poly(isobutylethylen-co-ethylen)-Copolymere mit einem Ethylenanteil im Copolymer von 3 bis 45 Mol%, Poly(methylethylene) mit Glastemperaturen im Bereich von 259 bis 266 K und Molmassen ($M_w$) im Bereich von 1 $10^5$ bis $8 \cdot 10^6$ und/oder Poly(methylethylen-co-ethylen)-Copolymere mit einem Ethylenanteil im Copolymer von 3 bis 45 Mol % eingesetzt.

Die zur Anwendung kommenden Peroxide sind :

- Acylperoxide wie Benzoylperoxid, 4-Chlorbenzoylperoxid, 3-Methoxybenzoylperoxid und/oder Methylbenzoylperoxid;

- Alkylperoxide wie Acetylbenzoylperoxid, Allyloxypropionylperoxid, Allyl-tert.butylperoxid, Benzoylperoxid, 2,2-Bis (tert.butylperoxybutan), 1,1-Bis-(tert.butylperoxi)-3,3,5-trimethylcyclohexan, n-Butyl-4,4-bis(tert.butylperoxi)valerat, Diisopropylaminomethyl-tertamylperoxid, Dimethylaminomethyl-tert.amylperoxid, Diethylaminomethyl-tert.butylperoxid, Dimethylaminomethyl-tert.butylperoxid, Dinitrobenzoylperoxid, 1.1-Di-(tert.amylperoxi)cyclohexan, Methoxybenzoylperoxid, Methylbenzoylperoxid, tert.Amylperoxid, tert.Butylcumylperoxid, tert.Butylpermaleinsäure, tert.Butylperoxid, 1-Hydroxybutyl-n-butylperoxid und/oder Succinoylperoxid;

- Hydroperoxide wie Decalinhydroperoxid undloder Tetralinhydroperoxid;

- Ketonperoxide wie Methylethylketonhydroperoxid;

- Perester und Peroxicarbonate wie Butylperacetat, Cumylperacetat, Cumylperpropionat, Cyclohexylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butyl-bicyclo-(2,2,1)heptanpercarboxylat, tert.Butyl-4-carbomethoxyperbutyrat, tert.Butylcyclobutanpercarboxylat, tert.Butylcyclohexylperoxycarboxylat, tert. Butylcyclopentylpercarboxylat, tert.Butylcyclopropanpercarboxylat, tert.Butyldimethylpercinnamat, tert.Butyl-2-(2,2-diphenylvinyl)perbenzoat, tert.Butyl-4-methoxyperbenzoat, tert.Butylperbenzoat, tert. Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcyclopropylpercarboxylat, tert.Butyl-4-nitrophenylperacetat, tert.Butylnitrophenylperoxycarbamat, tert.Butyl-N-succinimidopercarboxylat, tert.Butylpercrotonat, tert.Butylpermaleinsäure, tert.Butylpermethacrylat, tert.Butylperoctoat, tert.Butylperoxyisopropylcarbonat, tert.Butylperisobutyrat, tert.Butylperacrylat und/oder tert. Butylperpropionat.

Die zum Einsatz kommenden Monomere sind Acrylsäure,

- Acrylsäurederivate wie Acrylamid, Acrylnitril, Benzylacrylat, Butylacrylat, Cyclohexylacrylat, N,N-Dimethylacrylamid, Dodecylacrylat, Ethylacrylat, 2-Ethylhexylacrylat, 2-Ethoxyethylacrylat, Glycidylacrylat, Hydroxyethylacrylat, Isopropylacrylat, 2-Methoxyethylacrylat, 4-Methoxybenzylacrylat, Methylacrylat, Natriumacrylat, N-tert.butoxycarbonyl-2-aminoethylacrylat, Octylacrylat, Phenylmethylacrylat, Phenylacrylat, n-Propylacrylat und/oder Tetrahydrofurfurylacrylat;

- Diallylverbindungen wie Diallyldimethylsilan, Diallyl(2-hydroxy-3-phenoxypropyl)-isocyanurat, Diallylcyanurat, Diallylcyanoethylisocyanurat, Diallylcyanamid, Diallylmaleinat, Diallylmelamin, Diallylphthalat und/oder N,N'- Diallylweinsäurediamid;

- Dimethacrylate wie Ethylenglycoldimethacrylat, Propylenglycoldimethacrylat, Trimethylenglycoldimethacrylat, Butylenglycoldimethacrylat, Pentandioldimethacrylat, Hexandioldimethacrylat, Octandioldimethacrylat, Diglycoldimethacrylat und/oder Triglycoldimethacrylat;

- Diene wie Butadien, Butadien-1-carbonsäure, Chloropren, Cyclohexadien, Cyclopentadien, 2,3-Dimethylbutadien,

1-Ethoxybutadien, 1,4-Heptadien, 1,4-Hexadien, 1,6-Hexadien, Isopren, Norbornadien und/oder 1,4-Pentadien;

- Polymethacrylate wie Glycerintrimethacrylat, Trimethylolpropantrimethacrylat und/oder Pentaerythrittetramethacrylat ;

- Triallylverbindungen wie Triallylcitrat, Triallylcyanurat, Triallylisocyanurat und/oder Triallylphosphin;

- Monovinylverbindungen wie Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren , Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether , N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat , Vinyltriethoxysilan, Vinyltrimethoxysilan, Vinyl-tris(trimethoxysiloxy)silan und/oder Vinyltrimethylsilan;

Divinylverbindungen wie Divinylanilin, m-Divinylbenzen, p-Divinylbenzen, Diethylenglycoldivinylether, Divinylpentan, Divinylpropan und/oder 1,3-Divinyl-1,1,3,3-tetramethyldisiloxan;

- Allylverbindungen wie Allylacetat, Allylacrylat, Allylalkohol, Allylbenzol, Allylbenzylether, 3-Allyl-1-buten, Allylbutylether, Allylcyanurat, Allylcyclohexan, Allyldiethylketon, 4-Allyl-2,6-dimethoxyphenol, Allyldimethylchlorsilan, Allylepoxypropylether, Allylethylether, Allylglycidylether, Allylglycidylhexahydrophthalat, Allylglycidylphthalat, Allylheptanoat, Allylhexanoat, Allylmethacrylat, Allylmethoxyphenol, Allylmethylether, Allylmethylmaleat, Allyloxy-2,3-propandiol, N-Allylstearamid, Allyltolylether, Allyltrichlorsilan, Allyltriethoxysilan, Allyltrimethoxysilan, Allyltrimethylsilan, Allyltriphenylsilan und/oder Allylvinylether;

- Diacrylate wie Ethylenglycoldiacrylat, Propylenglycoldiacrylat, Trimethylenglycoldiacrylat, Butylenglycoldiacrylat, Pentandioldiacrylat, Hexandioldiacrylat, Octandioldiacrylat, Diglycoldiacrylat und/oder Triglycoldiacrylat,

- Makromere auf Basis von Oligobutadienen, Polysiloxanen und/oder Polyethern mit Acryl-, Allyl-, Isocyanat-, Oxazolin- oder Vinylendgruppen.

Als Stabilisatoren werden bevorzugt Mischungen aus 0,01 bis 0,6 Masse% phenolischen Antioxidantien, 0,01 bis 0,6% Verarbeitungsstabilisatoren auf Basis von Phosphiten , 0,01 bis 0,6 % Hochtemperaturstabilisatoren auf Basis von Disulfiden und Thioäthern und 0,01 bis 0,8 % sterisch gehinderten Aminen (HALS) eingesetzt .

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl-4-hydroxyphenyl )propionsäureoctadecylester, 1,3,5-Trimethyl-2,4,6-tris(3',5'-di-tert.butyl-4-hydroxybenzyl)benzen und/oder Pentaerythritoltetrakis[3-(3,5-di-tert.butyl-4-hydroxyphenyl)]-propionat.

Als HALS-Verbindungen sind Bis-2,2,6,6-tetramethyl-4-piperidylsebazat und/oder Poly - ([1,1,3,3,-tetramethylbutyl)-imino] - 1,3,5-triazin-2,4,diyl)[2,2,6,6,-tetramethylpiperidyl)-amino] - hexamethylen - 4-(2,2,6,6-tetramethyl) piperidyl)-imino] besonders geeignet.

Beim Bestrahlungsverfahren erfolgt die Herstellung der pulverförmigen Mischungen aus 95 bis 99,98% Masse% Poly(alkylethylenen) und 0,02 bis 5 Masse% Acrylsäure bzw. Acrylsäurederivaten, Allylverbindungen, Diacrylaten, Diallylverbindungen, Dienen, Dimethacrylaten, Divinylverbindungen; Makromeren mit Acryl-, Allyl, Isocyanat-, Oxazolin- oder Vinylendgruppen auf Basis von Oligobutadienen, Polysiloxanen und/oder Polyethern; Monovinylverbindungen, Polyacrylaten, Polymethacrylaten und/oder Triallylverbindungen bevorzugt in Innenmischern, statischen Mischern oder Wirbelschichtreaktoren.

Beim Schmelzereaktionsverfahren werden vorzugsweise Doppelschneckenextruder mit einem L/D - Verhältnis von 30 bis 45 eingesetzt. Günstige Reaktionstemperaturen für beide Reaktionsstufen liegen bei Einsatz von Poly (ethylethylen)-Homo- und -Copolymeren bei 140 bis 250 °C, für Poly(methylethylen)-Homo- und -Copolymere bei 165 bis 270 °C und für Poly(isobütylethylen)-Homo- und -Copolymere bei 240 bis 310 °C.

Beim Festphasenreaktionsverfahren sind als Reaktoren mit Umwälzeinrichtungen und Kreislaufträgergasführung Bunkervorratsbehälter bevorzugt geeignet.

Die erfindungsgemäßen Poly(alkylethylene) mit H- und Y-Struktur und einem ψ - Index von 2 $10^{-3}$ bis 8 $10^{-3}$ (kJ/mol grd) sowie die Mischungen mit nicht-modifizierten Poly(alkylethylenen), Stabilisatoren, Antistatika, Pigmenten, Nukleierungsmitteln, Füllstoffen, Flammschutzmittel und / oder Verarbeitungshilfsmitteln sind bevorzugt zur Herstellung von Folien, Beschichtungen, Rohren, Hohlkörpern und Schaumstoffen geeignet.

Die Erfindung wird durch nachfolgende Beispiele erläutert:

Beispiel 1

In einen Wirbelschichtreaktor mit einem Volumen von 15 l, der in einer Gammabestrahlungsanlage vom Typ "Gammabeam" installiert ist, werden 245o g pulverförmiges Poly(ethylethylen)-Homopolymer ( $T_g$ =248 K, $M_w$ = 8 $10^5$) dosiert und durch Wirbeln mit Reinstickstoff inertisiert. Nach Aufheizung auf 9o°C werden in Bestrahlungsposition (Dosisleistung o,55 KGy/Std.) in einem Zeitraum von 8 Std. über das Wirbelgas 8,5 g Styren/Std. in den Reaktor eingetragen. Nach Absenkung der Strahlenquellen wird das modifizierte Poly(ethylethylen) unter Inertgas auf 25°C abgekühlt, durch Zudosierung von o,35% einer Mischung aus o,15 % 2-tert.Butyl-4,6-dimethylphenol und o,2o % Bis-2,2,6,6-tetramethyl-4-piperidylsebazat (1o% Lösung in Aceton) stabilisiert und durch Extrusion in einem Werner&Pfleiderer-Doppelschneckenextruder vom Typ ZSK 2o in einem zweiten Reaktionsschritt einer thermischen Behandlung bei 162°C (Verweilzeit 4,8 Min.) unterzogen. Das resultierende strukturisomere Poly(ethylethylen) besitzt einen ψ - Index von 2,3·$10^{-3}$ (kJ/mol.grd) und liegt in H- und Y-Struktur vor, dabei ist $R_1$=$R_3$=$R_4$=$C_2H_5$ und $R_2$=$R_5$=H, y+z= 345. Der IR-spektroskopisch ermittelte Anteil der polymeren Brückenglieder auf Basis von Styren liegt bei 2,5 Masse%.

Beispiel 2

In einen Wirbelschichtreaktor nach Beispiel 1 werden 3280 g pulverförmiges Poly(ethylethylen-co-ethylen) -Copolymer (Ethylenanteil 6 Mol%, Schmelzindex 3,5 g/10 min bei 190 °C /21,19 N ) dosiert und durch Wirbeln mit Reinstickstoff inertisiert. Nach Aufheizung auf 8o°C werden in Bestrahlungsposition (Dosisleistung o,55 KGy/Std.) in einem Zeitraum von 3,5 Std. über das Wirbelgas 2,5g/Std. Allylacrylat in den Reaktor eingetragen. Nach Absenkung der Strahlenquellen wird das modifizierte Poly(ethylethylen-co-ethylen) unter Inertgas auf 25°C abgekühlt, durch Zudosierung von o,45% einer Mischung aus o,25% 2,6-Di-tert.butyl-4-methylphenol und o,20%Bis-2,2,6,6-tetramethyl-4-piperidylsebazat (1o% Lösung in Acetón) stabilisiert und durch Extrusion in einem Werner& Pfleiderer - Doppelschneckenextruder vom Typ ZSK 2o in einem zweiten Reaktionsschritt einer thermischen Behandlung bei 166°C (Verweilzeit 4,2 Min.) unterzogen. Das resultierende strukturisomere Poly(ethylethylen-co-ethylen)-Copolymer besitzt einen ψ - Index von 3,4 · $10^{-3}$ (kJ/mol grd) und liegt in H- und Y-Struktur vor, dabei ist $R_1$=$R_3$=$C_2H_5$ und $R_2$= $R_4$=$R_5$=H, y+z =295. Der IR-spektroskopisch ermittelte Anteil der polymeren Brückenglieder auf Basis von Allylacrylat liegt bei 0,22 Masse% ; das t/u - Verhältnis beträgt etwa 16 .

Beispiel 3

In einen Wirbelschichtreaktor nach Beispiel 1 werden 3960g eines Poly(isobutylethylen)-Homopolymers ($T_g$ = 300 K, $M_w$ = 6·$10^5$ dosiert und durch Wirbeln mit Reinstickstoff inertisiert. Nach Aufheizung auf 14o°C werden in Bestrahlungsposition (Dosisleistung o,55 KGy/Std.) in einem Zeitraum von 5,3 Std. über das Wirbelgas 4,9 g/Std. Glycidylacrylat in den Reaktor eingetragen. Nach Absenkung der Strahlenquellen wird das modifizierte Poly(isobutylethylen) unter Inertgas eine weitere Stunde bei 14o°C belassen, auf 25°C abgekühlt und durch Zudosierung von o, 4o% einer Mischung aus o,20%2-tert.Butyl-4,6-dioctadecylphenol und o,2o% Bis-2,2,6,6-tetramethyl-4-piperidylsebazat (1o% Lösung in Aceton) stabilisiert. Das resultierende strukturisomere Poly(isobutylethylen.) besitzt einen ψ - Index von 3,2 $10^{-3}$ (kJ/mol grd) und liegt in H-und Y- Struktur vor, dabei ist $R_1$=$R_3$=$R_4$=i-$C_4H_9$ und $R_2$= $R_5$=H, y+z=173. Der IR-spektroskopisch ermittelte Anteil der polymeren Brückenglieder auf Basis von Glycidylacrylat liegt bei 0,58 %.

Beispiel 4

Im Innenmischer wird unter Stickstoffbegasung auf ein Poly(ethylethylen)-Homopolymer($T_g$=248 $M_w$=4 $10^5$) o,15% 2,6-Dicyclopentyl-4-methylphenol, 0,15 % Bis-2,2,6,6-tetramethyl-4-piperidylsebazat und 3,2% tert.Butylacrylat aufgetrommelt. Die Bestrahlung der pulverförmigen Mischung in einem Wirbelschichtreaktor erfolgt durch einen Elektronenbeschleuniger vom Cockroft-Walton-Typ (Strahlstromenergie 35oo KeV, 2 x 35 KW). In die Schmalseitenflächen

des Wirbelschichtreaktors (Volumen o,3 $m^3$ , Anströmboden o,95 x o,2o m) sind die beiden Strahlaustrittsfenster der Scanner integriert. Bei einer Bestrahlungstemperatur von 11o°C wird die pulverförmige Mischung bei einem Durchsatz von o,5kg/s in den Wirbelschichtreaktor kontinuierlich ein- und ausgetragen und anschließend in einem zweiten Reaktionsschritt in einem Werner&Pfleiderer - Doppelschneckenextruder ZSK 120 unter inerten Bedingungen einer thermischen Behandlung bei 165 °C (Verweilzeit 6,3 Min.) unterzogen. Das resultierende strukturisomere Poly(ethylethylen)-Homopolymer besitzt einen ψ - Index von 3,2 $10^{-3}$ (kJ/mol grd) und liegt in H- und Y-Struktur vor, dabei ist $R_1$=$R_3$= $R_4$= $C_2H_5$, $R_2$= $R_4$ = H und y+z=31o und w=620. Der Anteil der polymeren Brückenglieder auf Basis von tert.Butylacrylat beträgt 2,65 %.

Beispiel 5

Im Innenmischer wird unter Stickstoffbegasung auf ein pulverförmiges Poly(methylethylen)-Homopolymer ($T_g$ = 263 K, $M_w$ = 6 $10^5$) 0,31 % 2,6-Di-tert.butyl-4-methoxymethylphenol 0,15 % Bis-2,2,6,6-tetramethyl-4-piperidylsebazat und o,35% Divinylbenzol aufgetrommelt. Die Bestrahlung der pulverförmigen Mischung in dem o,3 $m^3$ Wirbelschichtreaktor erfolgt durch einen Elektronenbeschleuniger nach Beispiel 4. Bei einer Bestrahlungstemperatur von 11o°C wird die pulverförmige Mischung bei einem Durchsatz von 1,5kg/s in den Wirbelschichtreaktor kontinuierlich ein- und ausgetragen und anschließend in einem zweiten Reaktionsschritt in einem Werner &Pfleiderer - Doppelschneckenextruder ZSK 120 unter inerten Bedingungen einer thermischen Behandlung bei 220°C (Verweilzeit 4,9 Min.) unterzogen. Das resultierende strukturisomere Poly(methylethylen) besitzt einen ψ - Index von 4,1 $10^{-3}$ (kJ/mol grd) und liegt in H- und Y-Struktur vor, dabei ist $R_1$=$R_3$=$R_4$=$CH_3$ und $R_2$= $R_5$=H, y+z=540. Der IR-spektroskopisch ermittelte Anteil der polymeren Brückenglieder auf Basis von Divinylbenzol liegt bei 0,32 %.

Beispiel 6

Im Innenmischer wird unter Stickstoffbegasung auf ein pulverförmiges Poly(ethylethylen-co-phenylethylen) -Copolymer (Phenylethylengehalt 5 Mol%, Schmelzindex 6,8 g/10 min bei 190 °C/21,19 N) o,15% 2,6-Di-tert.butyl-4-methoxymethylphenol, 0,15 % Bis-2,2,6,6-tetramethyl-4-piperidylsebazat und 1,2% Vinyltrimethylsilan aufgetrommelt. Die Bestrahlung der pulverförmigen Mischung in dem o,3 $m^3$ Wirbelschichtreaktor erfolgt durch einen Elektronenbeschleuniger nach Beispiel 4 . Bei einer Bestrahlungstemperatur von 65°C wird die pulverförmige Mischung bei einem Durchsatz von o,7kg/s in den Wirbelschichtreaktor kontinuierlich ein- und ausgetragen und anschließend in einem zweiten Reaktionsschritt in einem Werner&Pfleiderer - Doppelschneckenextruder ZSK 120 unter inerten Bedingungen einer thermischen Behandlung bei 17o°C (Verweilzeit 5,2 Min.) unterzogen. Das resultierende strukturisomere Poly(ethylethylen-co-phenylethylen)- Copolymer besitzt einen ψ - Index von 3,7 $10^{-3}$ (kJ/mol grd) und liegt in H- und Y- Struktur vor, dabei ist $R_1$=$R_3$= $C_2H_5$, $R_2$= $R_5$=H, $R_4$=$C_5H_5$,y+z=215. Der IR-spektroskopisch ermittelte Anteil der polymeren Brückenglieder auf Basis von Vinyltrimethylsilan liegt bei 0,95 %, das t/u- Verhältnis beträgt etwa 19.

Beispiel 7

Im Innenmischer wird unter Stickstoffbegasung auf ein pulverförmiges Poly(isobutylethylen-co-ethylen)-Copolymer (Ethylenanteil 8 Mol%, Schmelzindex 0,8 g/10 min bei 230 °C) 0,6% Allylmethacrylat aufgetrommelt. Die Bestrahlung der pulverförmigen Mischung in einem Wirbelschichtreaktor erfolgt durch einen mit 3 Scannern ausgerüsteten Linearelektronenbeschleuniger (Strahlstromenergie 8000 KeV, Strahlleistung 3 x 5 KW). Der Anströmboden des Wirbelschichtreaktors (Volumen o,94 $m^3$) hat die Form eines gleichseitigen Dreiecks mit einer Seitenlänge von 1,3 m. In die drei Seitenflächen sind die Strahlaustrittsfenster der Scanner integriert. Bei einer Bestrahlungstemperatur von 175°C wird die pulverförmige Mischung bei einem Durchsatz von 4o kg/Min. in den Wirbelschichtreaktor kontinuierlich ein- und ausgetragen und anschließend in einem zweiten Reaktionsschritt unter Zusatz von o,15% 2,6-Di-tert.butyl-4-methoxymethylphenol und 0,15 % Bis-2,2,6,6-tetramethyl-4-piperidylsebazat in einem Werner&Pfleiderer - Doppelschneckenextruder ZSK 120 unter inerten Bedingungen einer thermischen Behandlung bei 255°C (Verweilzeit 4,2 Min.) unterzogen. Das resultierende strukturisomere Poly(isobutylethylen-co-ethylen)-Copolymer besitzt einen ψ - Index von 3,4 $10^{-3}$ (kJ/mol grd) und liegt in H- und Y-Struktur vor, dabei ist $R_1$=$R_3$= i-$C_4H_9$, $R_2$= $R_5$= $R_4$=H, y+z=250. Der IR-spektroskopisch ermittelte Anteil der polymeren Brückenglieder auf Basis Allylmethacrylat liegt bei o,56 %, das t/u-Verhältnis beträgt etwa 11,5.

Beispiel 8

Im Innenmischer wird unter Stickstoffbegasung auf ein Poly(methylethylen-co-ethylen)-Copolymer (Ethylengehalt 7 %, $M_w$=3,5·$10^5$) o,25% Glycerintrimethacrylat und o,65% Behensäure aufgetrommelt. Die Bestrahlung der pulverförmigen Mischung erfolgt in einem Wirbelschichtreaktor mit einer Bestrahlungseinrichtung nach Beispiel 7 bei

einem Durchsatz von 35 kg/Minute und einer Bestrahlungstemperatur von 125°C. Nach Zusatz von o,2% 4,4' - Thio-bis-(6-tert.butyl-2-methylphenol) und o,15% Poly-([1,1,3,3,-tetramethylbutyl)-imino]-1,3,5-triazin-2,4-diyl)[2,2,6,6,-tetramethylpiperidyl)-amino]-hexamethylen-4-(2,2,6,6-tetramethyl)piperidyl)-imino] wird die pulverförmige Mischung in einem zweiten Reaktionsschritt in einem Werner&Pfleiderer - Doppelschneckenextruder ZSK 120 unter inerten Bedingungen einer thermischen Behandlung bei 215°C (Verweilzeit 4,6 Min.) unterzogen. Das resultierende strukturisomere Poly(methylethylen-co-ethylen)-Copolymer besitzt einen ψ - Index von 4,4 $10^{-3}$ (kJ/mol grd) und liegt in H- und Y-Struktur vor, dabei ist $R_1$=$R_3$= $CH_3$, $R_2$= $R_4$= $R_5$= H und y+z=35o und w=7oo . Der Anteil der polymeren Brückenglieder auf Basis von Glycerintrimethacrylat beträgt 0,24 %.

Beispiel 9

Im Innenmischer wird unter Stickstoffbegasung auf ein pulverförmiges Poly(ethylethylen-co-methylethylen) -Copolymer (Methylethylenanteil 92 Mol%, Schmelzindex 1,8 g/10 min bei 230 °C /21,19 N) o,32% Allylglycidylphthalat aufgetrommelt Die Bestrahlung der pulverförmigen Mischung erfolgt in einem Wirbelschichtreaktor mit einer Bestrahlungseinrichtung nach Beispiel 7 bei einem Durchsatz von 37 kg/Minute und einer Bestrahlungstemperatur von 125°C. Nach Zusatz von o,2% 4,4' - Thio-bis-(6-tertbutyl-2-methylphenol) und o,15% Poly([1,1,3,3,-tetramethylbutyl)-imino] - 1,3,5-triazin-2,4-diyl) -[2, 2, 6, 6, - tetramethylpiperidyl)-amino]-hexamethylen-4-(2,2 ,6,6-tetramethyl)piperidyl)-imino] wird die pulverförmige Mischung in einem zweiten Reaktionsschritt in einem Werner&Pfleiderer - Doppelschneckenextruder ZSK 120 unter inerten Bedingungen einer thermischen Behandlung bei 2o5°C (Verweilzeit 4,8 Min.) unterzogen. Das resultierende strukturisomere Poly(ethylethylen-co-methylethylen)-Copolymer besitzt einen ψ - Index von 4,1 $10^{-3}$ (kJ/mol grd) und liegt in H- und Y- Struktur vor, dabei ist $R_1$=$R_3$=$C_2H_5$ und $R_2$= $R_5$=H, $R_4$=$CH_3$ , y+z = 770. Der IR-spektroskopisch ermittelte Anteil der polymeren Brückenglieder auf Basis von Allylglycidylphthalat liegt bei etwa 0,3o Masse%, das t/u-Verhältnis beträgt etwa 0,08.

Beispiel 1o

Im Innenmischer wird unter Stickstoffbegasung auf ein pulverförmiges Poly(isobutylethylen-co-n-butylethylen)-Copolymer (n-Butylethylenanteil 42 Mol%, Schmelzindex 0,9 g/10 min. bei 230 °C/49 N ) o,22% Ethylenglycoldiacrylat aufgetrommelt und die pulverförmige Mischung durch Inertgas pneumatisch in einen Kassettenreaktor o,2o x 3,5o m mit 4 integrierten Kathoden eines Niederenergiebeschleunigers vom Bandstrahltyp (Elektronenenergie 25o KeV, Strahlleistung 4 x 1o KW ) und integrierter Vibrationseinrichtung gefördert, der Durchsatz bei einer Bestrahlungstemperatur von 16o°C beträgt 43 kg/Minute. Nach Zusatz von o,18% 2,6-Di-tert.butyl-4-methoxymethylphenol und 0,15 % Bis-2,2,6,6-tetramethyl-4-piperidylsebazat wird die pulve-förmige Mischung in einem zweiten Reaktionsschritt in einem Werner&Pfleiderer - Doppelschneckenextruder ZSK 120 unter inerten Bedingungen einer thermischen Behandlung bei 255°C (Verweilzeit 5,3 Min.) unterzogen. Die resultierende Mischung aus nichtmodifiziertem und strukturisomerem Poly(isobutylethylen-co-n-butylethylen)-Copolymer besitzt einen ψ - Index von 3,1 $10^{-3}$ (kJ/mol grd) , dabei liegt das strukturisomere Poly(alkylethylen) in H- und Y-Struktur vor, $R_1$=$R_3$= i-$C_4H_9$, $R_2$= $R_5$=H, $R_4$= n- $C_4H_9$, y+z =410. Der IR-spektroskopisch ermittelte Anteil der polymeren Brückenglieder auf Basis von Ethylenglycoldiacrylat liegt bei o,21 Masse%, das t/u-Verhältnis beträgt etwa 1,4.

Beispiel 11

In einen Kassettenreaktor mit Bestrahlungseinrichtung nach Beispiel 1o wird ein Poly(methylethylen)-Homopolymer ($M_w$= 4,9 $10^5$, $T_g$=265 K) durch einen Trägergasstrom aus 97% Reinststickstoff und 3% Butadien gefördert, der Durchsatz der wirbelnden Schüttgutschicht bei einer Bestrahlungstemperatur von 16o°C beträgt 31 kg/Minute. Nach Zusatz von o,45% einer Mischung aus o,25% 2,6-Di-tert.butyl-4-methylphenol und 0,2o%Bis-2,2,6,6-tetramethyl-4-piperidylsebazat wird die pulverförmige Mischung in einem zweiten Reaktionsschritt in einem Werner&Pfleiderer - Doppelschneckenextruder ZSK 120 unter inerten Bedingungen einer thermischen Behandlung bei 2oo°C (Verweilzeit 5,1 Min.) unterzogen. Das resultierende Blend aus dem strukturisomeren Poly(methylethylen) und dem nichtmodifizierten Poly(methylethylen)-Homopolymer besitzt einen ψ - Index von 2,9 $10^{-3}$ (kJ/mol·grd) und einen $M_n$-Wert von 7,7 $10^4$.

Beispiel 12

Im Innenmischer wird unter Stickstoffbegasung auf ein pulverförmiges Poly(ethylethylen-co-chlorethylen)-Copolymer (Chlorethylengehalt 4 Mol%, Schmelzindex 3,2 g/10 min bei 190 °C/21,19 N ) 3,9% Methylmethacrylat aufgetrommelt und pneumatisch in den Kassettenreaktor mit Bestrahlungseinrichtung nach Beispiel 1o gefördert, der Durchsatz der wirbelnden Schüttgutschicht bei einer Bestrahlungstemperatur von 6o°C beträgt 18 kg/Minute. Nach

Zusatz von o,4o% einer Mischung aus o,25% 2,6-Di-tert.butyl-4-methylphenol und o,15%Bis-2,2,6,6-tetramethyl-4-piperidylsebazat wird die pulverförmige Mischung in einem zweiten Reaktionsschritt in einem Werner&Pfleiderer - Doppel-schneckenextruder ZSK 120 unter inerten Bedingungen einer thermischen Behandlung bei 165°C (Verweilzeit 5,9 Min.) unterzogen Das resultierende Blend aus nichtmodifiziertem und strukturisomerem Poly(ethylethylen-co-chlorethylen)-Copolymer besitzt einen ψ - Index von 2,6 $10^{-3}$ (kJ/mol grd), dabei liegt das modifizierte Poly(alkylethylen) liegt in H- und Y-Struktur vor, $R_1$=$R_3$= i-$C_4H_9$ , $R_2$= $R_5$= H, $R_4$=Cl und y+z=325. Der Anteil der polymeren Brückenglieder auf Basis Methylmethacrylat liegt bei 3,1 %.

Beispiel 13

40 Teile des strukturisomeren Poly(ethylethylen) nach Beispiel 1 werden mit 60 Teilen nichtmodifiziertern Poly (butylethylen), 0,23 Teilen 2-tert.Butyl-4,6-dimethylphenol, 0,10 Teilen Behensäure, 0,20 Teilen Calciumstearat und 0,20 Teilen Poly-([1,1,3,3,-tetramethylbutylimino]triazin-2,4,diyl)-[2,2,6,6,-tetramethylpiperidyl)-amino]-hexamethylen-4-(2,2,6,6-tetramethyl)piperidyl)imino] gemischt und im Extruder bei 140/165/175/175/ 175/170/155 °C homogenisiert. Das resultierende Compound besitzt einen einen ψ-Index von 2,7·$10^{-3}$(kJ/mol·grd).

Beispiel 14

Je 2o Teile der strukturisomeren Poly(alkylethylene) nach Beispiel 5, 8 und 9 werden mit 15 Teilen eines nichtmodifizierten Poly(methylethylen-co-ethylen)-Copolymers (Ethylenanteil 50 %), 15 Teilen eines nichtmodifizierten Poly(ethylethylen-co-methylethylen)-Copolymers (Ethylethylenanteil 15 %), 9 Teilen Talkum und 1 Teil Ruß im Extruder bei 140/190/230/220/220/210/200 °C homogenisiert. Die Legierung besitzt einen ψ - Index von 2,4 · $10^{-3}$ (kJ/mol·grd).

Beispiel 15

Das strukturisomere Poly(isobutylethylen-co-ethylen)-Copolymer nach Beispiel 7 wird im Extruder mit Breitschlitzdüse bei 255 bis 275 °C zu Platten extrudiert. Ausgefräste Prüfkörper besitzen folgende Kennwerte: Zugfestigkeit 27 MPa, Bruchdehnung 16 %, Zugmodul 1,6 GPa, Biegemodul 1,4 GPa. Die entsprechenden Kennwerte für das nichtmodifizierte Poly(isobutylethylen) sind 23 MPa; 16%;1,2 GPa und 1,1 GP.

Beispiel 16

In einen Doppelschneckenextruder Werner & Pfleiderer ZSK 30, L/D = 42, mit Inertbegasung, Vakuumentgasung und Stranggranulierung, Temperaturprofil 140/170/165/ 190/ 165/190/145 °C, wird ein Poly(ethylethylen)-Homopolymer ( $T_g$ =248 K, $M_w$ = 8 $10^5$) mit 16 kg/h dosiert. In die Schmelze wird in Zone 3 mit 0,64 l/h eine 20 % Lösung von tert.Butylperbenzoat in Aceton dosiert. In die Zone 5 werden über getrennte Dosierpumpen Vinyltrimethoxysilan mit 0,61 l/h und eine 20 % Lösung von tert. Butylperbenzoat in Aceton mit 0,64 l/h dosiert. Das resultierende strukturisomere Poly(ethylethylen) besitzt einen ψ - Index von 3,3·$10^{-3}$ (kJ/mol grd) und liegt in H- und Y-Struktur vor, dabei ist $R_1$=$R_3$=$R_4$=$C_2H_5$ und $R_2$=$R_5$=H, y+z= 380. Der IR-spektroskopisch ermittelte Anteil der polymeren Brückenglieder auf Basis von Vinyltrimethoxysilan liegt bei 3,2 Masse% .

Beispiel 17

In einen Werner & Pfleiderer-Doppelschneckenextruder nach Beispiel 16 , Temperaturprofil 140/170/165/190/165/190/145 °C, wird ein Poly(ethylethylen-co-ethylen)-Copolymer (Ethylenanteil 6 Mol%, Schmelzindex 3,5 g/10 min bei 190 °C /21,19 N ) mit 12 kg/h dosiert. In die Schmelze wird in Zone 3 mit 0,48 l/h eine 10 % Lösung von tert.Butylpertoluat in Aceton dosiert. In die Zone 5 werden über getrennte Dosierpumpen Allylmethylmaleat mit 0,11 l/h und eine 10 % Lösung von tert.Butylpertoluat mit 0,84 l/h dosiert. Das resultierende strukturisomere Poly (ethylethylen-co-ethylen)-Copolymer besitzt einen ψ - Index von 3,1 · $10^{-3}$ (kJ/mol grd) und liegt in H- und Y-Struktur vor, dabei ist $R_1$=$R_3$=$C_2H_5$ und $R_2$= $R_{4=}R_5$=H, y+z =275. Der IR-spektroskopisch ermittelte Anteil der polymeren Brükkenglieder auf Basis von Allylmethylmaleat liegt bei 0,75 Masse% ; das t/u - Verhältnis beträgt etwa 16 .

Beispiel 18

In einen Werner & Pfleiderer-Doppelschneckenextruder nach Beispiel 16, Temperaturprofil 140/175/190/165/190/180/145 °C, wird ein Poly(ethylethylen-co-methylethylen)-Copolymer (Methylethylenanteil 92 Mol%, Schmelzindex 1,8 g/10 min bei 230 °C /21,19 N) , , auf das 0,17 % 3-Methoxybenzoylperoxid im Innenmischer aufgetrommelt wurde, mit 21 kg/h dosiert. In die Zone 4 des Extruders werden über getrennte Dosierpumpen eine 20

% Lösung von 3-Methoxybenzoylperoxid in Methylethylketon mit 0,18 l/h und Allylglycidylhexylhydrophthalat mit 0,16/h dosiert. Das resultierende strukturisomere Poly(ethylethylen-co-methylethylen)-Copolymer besitzt einen $\psi$ - Index von 4,1 $10^{-3}$ (kJ/mol grd) und liegt in H- und Y- Struktur vor, dabei ist $R_1$=$R_3$=$C_2H_5$ und $R_2$= $R_5$=H, $R_4$=$CH_3$ , y+z = 790. Der IR-spektroskopisch ermittelte Anteil der polymeren Brückenglieder auf Basis von Allylglycidylhexylhydrophthalat liegt bei etwa 0,62 Masse%, das t/u-Verhältnis beträgt etwa 0,08.

Beispiel 19

In einen Werner & Pfleiderer-Doppelschneckenextruder nach Beispiel 16, Temperaturprofil 245/270/280/260/280/270/250 °C, wird ein Poly(isobutylethylen)-Homopolymer ($T_g$ = 300 K, $M_w$ = 6·$10^5$), auf das 0,18 % tert.Butylperoxid aufgetrommelt wurde, mit 18 kg/h in den Einzugstrichter des Doppelschneckenextruders dosiert. In die Zone 4 des Extruders werden über getrennte Dosierpumpen eine 10 % Lösung von tert.Butylcumylperoxid in Diethylketon mit 0,34 l/h und Diallylphthalat mit 0,12 l/h dosiert. Das resultierende strukturisomere Poly(isobutylethylen) besitzt einen $\psi$ - Index von 3,6 · $10^{-3}$ (kJ/mol grd) und liegt in H- und Y- Struktur vor, dabei ist $R_1$=$R_3$=R4=i-$C_4H_9$ und $R_2$= $R_5$=H, y+z=190. Der IR-spektroskopisch ermittelte Anteil der polymeren Brückenglieder auf Basis von Diallylphthalat liegt bei 0,52 %.

Beispiel 20

In einen Werner & Pfleiderer-Doppelschneckenextruder nach Beispiel 16, Temperaturprofil 170/205/185/1701210/170/160 °C, wird ein Poly(methylethylen)-Homopolymer ($T_g$ = 263 K, $M_w$ = 6 $10^5$), auf das 0,31 % 2,6-Di-tert.butyl-4-methoxymethylphenol im Innenmischer aufgetrommelt wurde, mit 14 kg/h in den Einzugstrichter des Doppelschneckenextruders dosiert. In die Zone 4 des Extruders werden über getrennte Dosierpumpen eine 10 % Lösung von Benzoylperoxid in Aceton mit 0,36 l/h und Divinylbenzol mit 0,042 l/h dosiert. Das resultierende strukturisomere Poly(methylethylen) besitzt einen $\psi$ - Index von 3,9 · $10^{-3}$ (kJ/mol grd) und liegt in H- und Y-Struktur vor, dabei ist $R_1$=$R_3$=R4=$CH_3$ und $R_2$= $R_5$=H, y+z=580. Der IR-spektroskopisch ermittelte Anteil der polymeren Brückenglieder auf Basis von Divinylbenzen liegt bei 0,27 %.

Beispiel 21

In einen Werner & Pfleiderer-Doppelschneckenextruder nach Beispiel 16, Temperaturprofil 220/260/245/280/245/270/235 °C, wird ein Poly(isobutylethylen-co-n-butylethylen)-Copolymer (n-Butylethylenanteil 42 Mol%, Schmelzindex 0,9 g/10 min, bei 230 °C/49 N ) mit 19,5 kg/h in den Einzugstrichter des Doppelschneckenextruders dosiert. In die Schmelze wird in Zone 3 eine 20 % Lösung von Cumylhydroperoxid in Aceton mit 0,195 l/h dosiert. In die Zone 5 des Extruders werden über getrennte Dosierpumpen eine 20 % Lösung von Cumylhydroperoxid in Aceton mit 0,14 l/h und Octandioldimethacrylat mit 0,23 l/h dosiert. Das resultierende strukturisomere Poly(isobutylethylen-co-n-butylethylen)-Copolymer besitzt einen $\psi$ - Index von 3,7·$10^{-3}$ (kJ/mol grd) und liegt in H- und Y-Struktur vor, dabei ist $R_1$=$R_3$= i-$C_4H_9$, $R_2$= $R_5$=H, $R_4$= n- $C_4H_9$ y+z=410. Der IR-spektroskopisch ermittelte Anteil der polymeren Brückenglieder auf Basis von Octandioldimethacrylat liegt bei 1,05 Masse%, das t/u-Verhältnis beträgt etwa 1,4.

Beispiel 22

In einen Werner & Pfleiderer-Doppelschneckenextruder ZSK 53, L/D = 36, mit Inertbegasung, Vacuumentgasung und Unterwassergranulierung, Temperaturprofil 140/165/155/180/155/185/155 °C, wird ein Poly(ethylethylen-co-phenylethylen)-Copolymer (Phenylethylengehalt 5 Mol%, Schmelzindex 6,8 g/10 min bei 190 °C/21,19 N) mit 32 kg/h in den Einzugstrichter des Doppelschneckenextruders dosiert. In die Schmelze wird in Zone 3 eine 20 % Lösung von Decalinhydroperoxid in Methylethylketon mit 0,16 l/h dosiert. In Zone 5 des Extruders werden über getrennte Dosierpumpen eine 20 % Lösung von Decalinhydroperoxid mit 0,14 l/h und eine 50 % Lösung von Glycidylacrylat in Ethanol mit 0,29 l/h dosiert. Das resultierende strukturisomere Poly(ethylethylen-co-phenylethylen)- Copolymer besitzt einen $\psi$ - Index von 4,03 · $10^{-3}$ (kJ/mol grd) und liegt in H- und Y- Struktur vor, dabei ist $R_1$=$R_3$= $C_2H_5$ , $R_2$= $R_5$=H, $R_4$=$C_5H_5$ ,y+z=240. Der IR-spektroskopisch ermittelte Anteil der polymeren Brückenglieder auf Basis von Glycidylacrylat liegt bei 0,43 %, das t/u- Verhältnis beträgt etwa 19.

Beispiel 23

In einen Werner&Pfleiderer-Doppelschneckenextruder nach Beispiel 22, Temperaturprofil 245/27/255/28/285/280/250 °C , wird ein Poly(isobutylethylen-co-ethylen)-Copolymer (Ethylenanteil 8 Mol%, Schmelzindex 0,8 g/10 min bei 230 °C) mit 38 kg/h in den Einzugstrichter des Doppelschneckenextruders dosiert. In die

Schmelze wird in Zone 3 eine 20 % Lösung von tert.Butylhydroperoxid in Diethylketon mit 1,71 l/h dosiert. In Zone 5 des Extruders werden über getrennte Dosierpumpen eine 20 % Lösung von tert.Butylcumylperoxid in Methylethylketon mit 0,95 l/h und ein flüssiger Polyether auf Basis Polyethylenglycol mit Allylendgruppen (Molmasse 1450) mit 1,71 l/h dosiert. Das resultierende strukturisomere Poly(isobutylethylen-co-ethylen)- Copolymer besitzt einen ψ - Index von 3,8 · $10^{-3}$ (kJ/mol·grd) und liegt in H- und Y-Struktur vor, dabei ist $R_1$=$R_3$= i-$C_4H_9$ , $R_2$= $R_5$= $R_4$=H, y+z=270. Der IR-spektroskopisch ermittelte Anteil der polymeren Brückenglieder auf Basis des Polyethers mit Allylendgruppen liegt bei 4,1 %, das t/u-Verhältnis beträgt etwa 11,5.

Beispiel 24

In einen Werner&Pfleiderer-Doppelschneckenextruder nach Beispiel 22, Temperaturprofil 70/200/230/230/210/200/200 °C, wird ein Poly(methylethylen)-Homopolymer ($M_w$= 4,9 $10^5$, $T_g$=265 K), auf das eine Mischung aus 0,1 % tert.Butylperoxybenzoat, 0,2 % Benzenpropionsäure-3,5-bis (1,1-dimethylethyl)-4-hydroxy-2, 2 -bis{[3-[3, 5-bis(1, 1-dimethylethyl) - 4-hydroxyphenyl]-1-oxopropoxy]-methyl}-1,3-propandiylester und 0,1 % Di-tert. butylhydroxytoluen aufgetrommelt wurden, mit 14,4 kg/h in den Einzugstrichter des Doppelschneckenextruders dosiert. In die Dosieröffnung von Zone 3 wird mit 21,6 kg/h wird eine Mischung aus einem Poly(methylethylen)-Homopolymer mit 0,2 % tert.Butylperoxybenzoat und 0,3 % Divinylbenzen dosiert. Das resultierende Blend aus dem strukturisomeren Poly(methylethylen) und dem nichtmodifizierten Poly(methylethylen)-Homopolymer besitzt einen ψ - Index von 4,2 $10^{-3}$ (kJ/mol grd) und einen $M_n$-Wert von 7,4 $10^4$.

Beispiel 25

In einen Werner&Pfleiderer-Doppelschneckenextruder nach Beispiel 22, Temperaturprofil 140/165/180/155/185/185/155 °C, wird ein Poly(ethylethylen-co-chlorethylen)-Copolymer (Chlorethylengehalt 4 Mol%, Schmelzindex 3,2 g/10 min bei 190 °C/21, 19 N ), auf das im Innenmischer 0,026 kg tert.Butylperbenzoat und 0,084 kg Calciumstearat aufgetrommelt wurde, mit 43 kg/h in den Einzugstrichter des Doppelschneckenextruders dosiert. In die Zone 4 des Extruders werden über getrennte Dosierpumpen eine 20 % Lösung von Cumylperoxid in Aceton mit 0,066 l/h und eine 10 % Lösung von Triallylisocyanurat in Aceton mit 2,36 l/h dosiert. Das resultierende strukturisomere Poly(ethylethylen-co-chlorethylen)-Copolymer besitzt einen ψ - Index von 3,6·$10^{-3}$ (kJ/mol grd) und liegt in H- und Y-Struktur vor, dabei ist $R_1$=$R_3$= i-$C_4H_9$, $R_2$= $R_5$= H, $R_4$=Cl und y+z=310. Der Anteil der polymeren Brückenglieder auf Basis Triallylisocyanurat liegt bei 0,53 %.

Beispiel 26

In einen Werner&Pfleiderer-Doppelschneckenextruder nach Beispiel 22, Temperaturprofil 180/210/230/195/235/235/190 °C, wird ein Poly(methylethylen-co-ethylen)-Copolymer (Ethylengehalt 7 %, $M_w$=3,5 $10^5$), auf das im Innenmischer 0,123 kg 2-tert.Butyl-4-methylphenol und 0,185 kg Behensäure aufgetrommelt wurden, mit 39 kg/h in den Einzugstrichter des Doppelschneckenextruders dosiert. In die Zone 4 des Extruders werden über getrennte Dosierpumpen eine 20 % Lösung von Di-tert.butylperadipat in Methylethylketon mit 0,154 l/h und eine 50 % Lösung von Trimethylolpropantrimethacrylat mit 0,115 l/h dosiert. Das resultierende strukturisomere Poly(methylethylen-co-ethylen)-Copolymer besitzt einen ψ - Index von 4,8 · $10^{-3}$ (kJ/mol·grd) und liegt in H- und Y-Struktur vor, dabei ist $R_1$=$R_3$= $CH_3$, $R_2$= $R_4$= $R_5$= H und y+z=340 und w=680 . Der Anteil der polymeren Brückenglieder auf Basis von-Trimethylolpropantrimethacrylat beträgt 0,15 %.

Beispiel 27

In einen Werner&Pfleiderer-Doppelschneckenextruder nach Beispiel 22, Temperaturprofil 140/170/190/165/185/180/155 °C, wird ein Poly(ethylethylen)-Homopolymer($T_g$=248K, $M_w$=4 $10^5$), auf das 0,066 kg tert.Butylpertoluat und 0,045 kg Bis-2,2,6,6-tetramethyl-4-piperidylsebazat aufgetrommelt wurde, mit 33 kg/h in den Einzugstrichter des Doppelschneckenextruders dosiert. In die Zone 4 des Extruders werden über getrennte Dosierpumpen eine 25 % Lösung von tert.Butylpertoluat in Aceton mit 0,26 l/h und Ethylhexylacrylat mit 1,15 l/h dosiert. Das resultierende strukturisomere Poly(ethylethylen)-Homopolymer besitzt einen ψ - Index von 3,4 $10^{-3}$ (kJ/mol grd) und liegt in H- und Y-Struktur vor, dabei ist $R_1$=$R_3$= $R_4$= $C_2H_5$, $R_2$= $R_4$ = H und y+z=340 und w=680. Der Anteil der polymeren Brückenglieder auf Basis von Ethylhexylacrylat beträgt 0,15 % .

Beispiel 28

40 Teile des strukturisomeren Poly(ethylethylen) nach Beispiel 16 werden mit 60 Teilen nichtmodifiziertem

Poly(butylethylen), 0,23 Teilen 2-tert.Butyl-4,6-dimethylphenol, 0,10 Teilen Behensäure, 0,20 Teilen Calciumstearat und 0,20 Teilen Poly([1,1, 3, 3, -tetra-methylbutyl)-imino]-triazin-2,4-diyl)-[2, 2, 6, 6,-tetramethylpiperidyl)-amino]-hexamethylen-4-(2,2,6,6-tetramethyl)piperidyl)-imino] gemischt und im Extruder bei 140/165/175/175/ 175/170/155 °C homogenisiert. Das resultierende Compound besitzt einen einen ψ-Index von 2,9 $10^{-3}$(kJ/mol grd).

Beispiel 29

Je 22 Teile der strukturisomeren Poly(alkylethylene) nach Beispiel 20, 24 und 26 werden mit 15 Teilen eines nichtmodifizierten Poly(methylethylen-co-ethylen)-Copolymers (Ethylenanteil 50 %), 10 Teilen eines nichtmodifizierten Poly(ethylethylen-co-methylethylen)-Copolymers (Ethylethylenanteil 15 %), 8 Teilen Talkum und 1 Teil Ruß im Extruder bei 140/190/ 230/220/220/210/200 °C homogenisiert. Die Legierung besitzt einen ψ - Index von 2,7 · $10^{-3}$ (kJ/mol grd).

Beispiel 30

Das strukturisomere Poly(isobutylethylen) nach Beispiel 19 wird im Extruder mit Breitschlitzdüse bei 265 bis 285 °C zu Platten extrudiert. Ausgefräste Prüfkörper besitzen folgende Kennwerte:

Zugfestigkeit 28 MPa, Bruchdehnung 15 %, Zugmodul 1,7 GPa, Biegemodul 1,5 GPa.

Die entsprechenden Kennwerte für das nichtmodifizierte Poly(isobutylethylen) sind 24 MPa; 15%; 1,3 GPa und 1,2 GPa.

Beispiel 31

In einen Bunkervorratsbehälter mit Schaufelrührwerk, Füllvolumen o,2 $m^3$, werden 5o kg eines Poly(ethylethylen-co-methylethylen)-Copolymers (Methylethylenanteil 92 Mol%, Schmelzindex 1,8 g/10 min bei 230 °C /21,19 N) pneumatisch dosiert. Über einen Verdampfer werden 15o g Glycidylacrylat und 135 g Methoxybenzoylperoxid unter Vacuum verdampft und über das Kreislaufgas in den Behälter eingetragen, wo die Modifikatoren bei 35o K im pulverförmigen Copolymer sorbiert werden. Die Mischung wird in einen Doppelschneckenextruder Werner & Pfleiderer ZSK 30, L/D = 42, mit Inertbegasung, Vakuumentgasung und Stranggranulierung, Temperaturprofil 100/145/175/180/185/17o/145°C mit 24 kg/Std. dosiert. Das resultierende strukturisomere Poly(ethylethylen - co - methylethylen)-Copolymer besitzt einen ψ - index von 4,0 $10^{-3}$ (kJ/mol grd) und liegt in H- und Y-Struktur vor, dabei ist $R_1$=$R_3$=$C_2H_5$ und $R_2$= $R_5$=H, $R_4$=$CH_3$ , y+z = 82o. Der IR-spektroskopisch ermittelte Anteil der polymeren Brückenglieder auf Basis von Glycidylacrylat liegt bei rd. o,28 Masse%, das t/u-Verhältnis beträgt etwa 0,08.

Beispiel 32

In einen Bunkervorratsbehälter nach Beispiel 31 werden 62 kg eines pulverförmigen Poly(ethylethylen)-Homopolymers ($T_g$=248K, $M_w$=4 $10^5$) pneumatisch dosiert. Über einen Verdampfer werden 1,86 kg Ethylhexylacrylat und o,39kg tert.Butylpertoluat unter Vacuum verdampft und über das Kreislaufgas in den Behälter eingetragen, wo die Modifikatoren bei 34o K im pulverförmigen Polymer sorbiert werden. Die Mischung wird mit 19 kg/Std. in einen Doppelschneckenextruder nach Beispiel 1 mit einem Temperaturprofil 9o/13o/17o/175/180/18017o/145 °C dosiert. Das resultierende strukturisomere Poly(ethylethylen)-Homopolymer besitzt einen ψ - Index von 2,6 $10^{-3}$ (kJ/mol grd) und liegt in H- und Y-Struktur vor, dabei ist $R_1$=$R_3$= $R_4$= $C_2H_5$, $R_2$= $R_4$ = H und y+z=330 und w=660. Der Anteil der polymeren Brückenglieder auf Basis von Ethylhexylacrylat beträgt rd.2,75% .

Beispiel 33

In einen Bunkervorratsbehälter nach Beispiel 31 werden 48 kg eines pulverförmigen Poly(methylethylen) -Homopolymers ($T_g$ = 263 K, $M_w$ = 6 $10^5$)) pneumatisch dosiert. Über einen Verdampfer werden 168g Allylacrylat und 120g Di-tert.butylperbenzoat unter Vacuum verdampft und über das Kreislaufgas in den Behälter eingetragen, wo die Modifikatoren bei 355 K im pulverförmigen Polymer sorbiert werden. Die Mischung wird mit 22 kg/Std. in einen Doppelschneckenextruder nach Beispiel 31 mit einem Temperaturprofil 100/145/180/185/18o/175/160 °C dosiert. Das resultierende strukturisomere Poly(methylethylen) besitzt einen ψ - Index von 4,o · $10^{-3}$ (kJ/mol grd) und liegt in H- und Y-Struktur vor, dabei ist $R_1$=$R_3$=$R_4$=$CH_3$ und $R_2$= $R_5$=H, y+z=570. Der IR-spektroskopisch ermittelte Anteil der polymeren Brückenglieder auf Basis von Allylacrylat liegt bei 0,33 %.

Beispiel 34

In einen Bunkervorratsbehälter nach Beispiel 31 werden 46 kg eines pulverförmigen Poly(isobutylethylen) -Homopolymers ($T_g$ = 300 K, $M_w$ = 6 $10^5$) pneumatisch dosiert. Über einen Verdampfer werden 267g Allylmethylmaleat und 161g tert.Butylhydroperoxid unter Vacuum verdampft und über das Kreislaufgas in den Behälter eingetragen, wo die Modifikatoren bei 43o K im pulverförmigen Polymer sorbiert werden. Die Mischung wird mit 16 kg/Std. in einen Doppelschneckenextruder nach Beispiel 1 mit einem Temperaturprofil 17o/220/260/265/260/250/235 °C dosiert. Das resultierende strukturisomere Poly(isobutylethylen) besitzt einen ψ - Index von 3,3 $10^{-3}$ (kJ/mol grd) und liegt in H- und Y- Struktur vor, dabei ist $R_1$=$R_3$=$R_4$=i-$C_4H_9$ und $R_2$= $R_5$=H, y+z=2o5. Der IR-spektroskopisch ermittelte Anteil der polymeren Brückenglieder auf Basis von Allylmethylmaleat liegt bei 0,54 %.

Beispiel 35

In einen Bunkervorratsbehälter mit Schaufelrührwerk, Füllvolumen 1,o $m^3$, werden 25o kg eines pulverförmigen Poly(methylethylen-co-ethylen)-Copolymers (Ethylengehalt 7 %, $M_w$=3,5·$10^5$) pneumatisch dosiert. Über einen Verdampfer werden o,5 kg Divinylbenzol und o,5 kg tert.Butylperbenzoat unter Vacuum verdampft und über das Kreislaufgas in den Behälter eingetragen, wo die Modifikatoren bei 4oo K im pulverförmigen Copolymer sorbiert werden. In einen Werner & Pfleiderer-Doppelschneckenextruder ZSK 53, L/D = 36, mit Inertbegasung, 3 Dosierbandwaagen, Vacuumentgasung und Unterwassergranulierung, Temperaturprofil 100/145/180/185/18o/175/160 °C, wird das mit Modifikatoren beladene Copolymer mit 45 kg/Std. sowie ein 1o% Batch von 2-tert.Butyl-4-methylphenol mit 13 kg/Std. und Behensäure mit o,35 kg/Std. dosiert. Das resultierende strukturisomere Poly(methylethylen-co-ethylen)-Copolymer besitzt einen ψ - Index von 4,4 $10^{-3}$ (kJ/mol grd) und liegt in H- und Y-Struktur vor, dabei ist $R_1$=$R_3$= CH3, $R_2$= $R_4$= $R_5$= H und y+z=35o und w=7oo. Der Anteil der polymeren Brückenglieder auf Basis von Divinylbenzol beträgt 0,18 % .

Beispiel 36

In einen Bunkervorratsbehälter nach Beispiel 35 werden 22o kg eines pulverförmigen Poly(isobutylethylen-co-ethylen)-Copolymers (Ethylenanteil 8 Mol%, Schmelzindex 0,8 g/10 min bei 230 °C) dosiert. Über einen Verdampfer werden 6,6 kg Vinyltrimethoxysilan und 1,1 kg tert.Butylpertoluat unter Vacuum verdampft und über das Kreislaufgas in den Behälter eingetragen, wo die Modifikatoren bei 445 K im pulverförmigen Copolymer sorbiert werden. In einen Werner & Pfleiderer-Doppel-schneckenextruder ZSK 53, L/D = 36, mit Inertbegasung, 3 Dosierbandwaagen, Vacuumentgasung und Unterwassergranulierung, Temperaturprofil 17o/22o/26o/265/260/250/235°C wird das mit Modifikatoren beladene Copolymer mit 38 kg/h sowie Calciumstearat mit o,24 kg/Std. und ein 1o% Batch von 3(3,5-Di-tert. butyl-4-hydroxyphenyl)propionsäureoctadecylester und Bis-2,2,6,6-tetramethyl-4-piperidylsebazat mit 9,5 kg/Std. dosiert. Das resultierende strukturisomere Poly(iso-butylethylen-co-ethylen)-Copolymer besitzt einen ψ - Index von 3,4 · $10^{-3}$ (kJ/mol grd) und liegt in H- und Y-Struktur vor, dabei ist $R_1$=$R_3$= i-$C_4H_9$ , $R_2$= $R_5$= $R_4$=H, y+z=270. Der IR-spektroskopisch ermittelte Anteil der polymeren Brückenglieder auf Basis von Vinyltrimethoxysilan liegt bei 2,8 %, das t/u-Verhältnis beträgt etwa 11,5.

Beispiel 37

In einen Bunkervorratsbehälter nach Beispiel 35 werden 27o kg eines pulverförmigen Poly(methylethylen) -Homopolymers ($M_w$= 4,9·$10^5$, $T_g$=265 K), auf das eine Mischung aus 0,2 % Benzenpropionsäure-3,5-bis (1,1-dimethylethyl)-4-hydroxy-2,2-bis{[3-[3,5-bis(1,1-dimethylethyl)-4-hydroxyphenyl]-1- oxopropoxy]methyl}-1,3-propandiylester und 0,1 % Di-tert.-butylhydroxytoluen aufgetrommelt wurde, pneumatisch dosiert. Über einen Verdampfer werden 4,o5 kg Styren und o,81 kg tert.Butylpertoluat unter Vacuum verdampft und über das Kreislaufgas in den Behälter eingetragen, wo die Modifikatoren bei 385 K im pulverförmigen Polymer sorbiert werden. In einen Werner & Pfleiderer-Doppel-schneckenextruder ZSK 53, L/D = 36, mit Inertbegasung, Vacuumentgasung und Unter-wassergranulierung, Temperaturprofil 100/145/180/185/18o/175/160 °C wird die pulverförmige Mischung mit 48 kg/Std. dosiert. Das resultierende strukturisomere Poly(methylethylen) besitzt einen ψ - Index von 4,2 $10^{-3}$ (kJ/mol grd) und liegt in H- und Y-Struktur vor, dabei ist $R_1$=$R_3$=R4=$CH_3$ und $R_2$= $R_5$=H, y+z=590. Der IR-spektroskopisch ermittelte Anteil der polymeren Brückenglieder auf Basis von Styren liegt bei 1,33 %.

Beispiel 38

45 Teile des strukturisomeren Poly(isobutylethylen) nach Beispiel 34 werden mit 55 Teilen nichtmodifiziertem Poly(isobutylethylen), 0,28 Teilen 2-tert.Butyl-4,6-dimethylphenol, 0,15 Teilen Behensäure, 0,25 Teilen Calciumstearat

und 0,15 Teilen Poly-([1,1,3,3,-tetramethylbutyl)- imino] -triazin -2,4,diyl)-[2,2,6,6-tetramethylpiperidyl)-amino]-hexamethylen- 4- (2,2,6,6 - tetramethyl)piperidyl)-imino] gemischt und im Extruder bei 245/27o/28o/ 28o/28o/27o/25o °C homogenisiert. Das resultierende Compound besitzt einen einen ψ-Index von $2{,}75 \cdot 10^{-3}$(kJ/mol grd).

Beispiel 39

Je 20 Teile der strukturisomeren Poly(alkylethylene) nach Beispiel 31, 32 und 33 werden mit 2o Teilen eines nichtmodifizierten Poly(methylethylen-co-ethylen)-Copolymers (Ethylenanteil 8 %), 10 Teilen eines nichtmodifizierten Poly(ethylethylen-co-methylethylen)-Copolymers (Ethylethylenanteil 15 %), 9 Teilen Talkum und 1 Teil Ruß im Extruder bei 145/190/230/230/220/210/200 °C homogenisiert. Die Legierung besitzt einen ψ - Index von $2{,}6 \cdot 10^{-3}$ (kJ/mol grd).

Beispiel 4o

Das strukturisomere Poly(isobutylethylen) nach Beispiel 34 wird im Extruder mit Breitschlitzdüse bei 260 bis 280 °C zu Platten extrudiert. Ausgefräste Prüfkörper besitzen folgende Kennwerte :

Zugfestigkeit 29 MPa, Bruchdehnung 14 %, Zugmodul 1,8 GPa, Biegemodul 1,6 GPa. Die entsprechenden Kennwerte für das nichtmodifizierte Poly(isobutylethylen) sind 24 MPa; 15%; 1,3 GPa und 1,2 GPa.

## Patentansprüche

1. Poly(alkylethylene), **dadurch gekennzeichnet, daß** die Poly(alkylethylene) H - und Y-Struktur und einen ψ - Index von $2\ 10^{-3}$ bis $8 \cdot 10^{-3}$ (kJ/mol·grd) besitzen, wobei

$$\psi = Tm \cdot \Delta Hm \cdot \beta \cdot \zeta \cdot Tg^{-1} \text{ (kJ/mol·grd)}$$

Tm = Schmelztemperatur (K)
ΔHm = Schmelzwärme (kJ/mol)
β = linearer thermischer Ausdehnungskoeffizient bei 25°C (1 / grd)
ζ = Schwellwert (Strangdurchmesser Poly(alkylethylen) mit H - und Y - Struktur / Strangdurchmesser nichtmodifiziertes Poly(alkylethylen) bei MFI-Bestimmung nach ISO 1131)
Tg = Glastemperatur (K),

Poly(alkylethylene) mit H - Struktur Makromere der Struktur

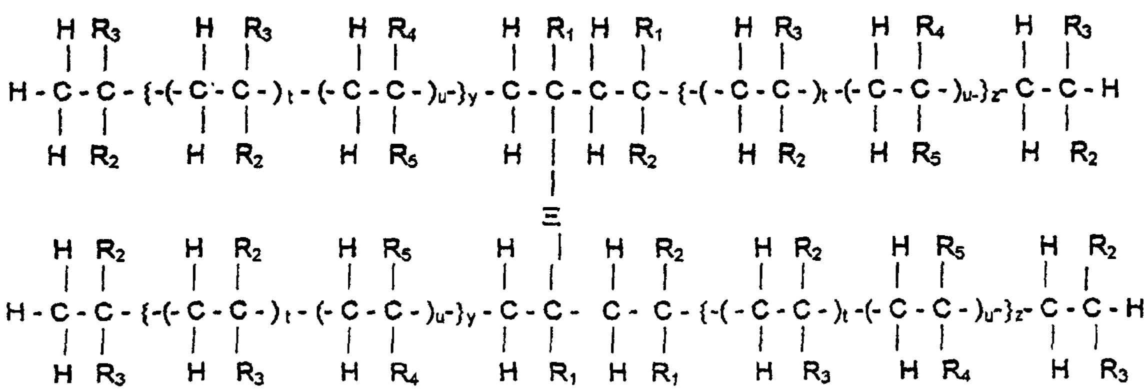

$R_1$ = $C_1$ bis $C_4$-Alkyl; $R_2$ = H; t/u = 0,03 bis 30; $R_3$ = $C_1$ bis $C_4$-Alkyl oder H; $R_4$ =H, $C_1$ bis $C_4$-Alkyl,Halogen oder Aryl, insbesondere Phenyl; $R_5$ = H oder $C_1$ bis $C_4$-Alkyl; y+z = 150 bis 3000
Ξ = Polymere Brückensegmente auf Basis von Acrylsäure , $C_4$- bis $C_{12}$- Acrylsäurederivaten, $C_3$- bis $C_{21}$-Allylverbindungen, $C_8$- bis $C_{14}$-Diacrylaten, $C_7$- bis $C_{16}$-Diallylverbindungen, $C_4$- bis $C_{10}$- Dienen, $C_9$- bis $C_{15}$- Dimethacrylaten, $C_7$- bis $C_{10}$-Divinylverbindungen, Monovinylverbindungen ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren , Ethylstyren, Ethylvinylacetat,

Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat , Vinyltriethoxysilan, Vinyltrimethoxysilan, Vinyltris(trimethoxysiloxy)silan, Vinyltrimethylsilan; $C_{12}$- bis $C_{17}$- Polyacrylaten, $C_{15}$- bis $C_{21}$- Polymethacrylaten und/oder $C_9$- bis $C_{12}$- Triallylverbindungen
und Poly(alkylethylene) mit Y - Struktur Makromere der Struktur

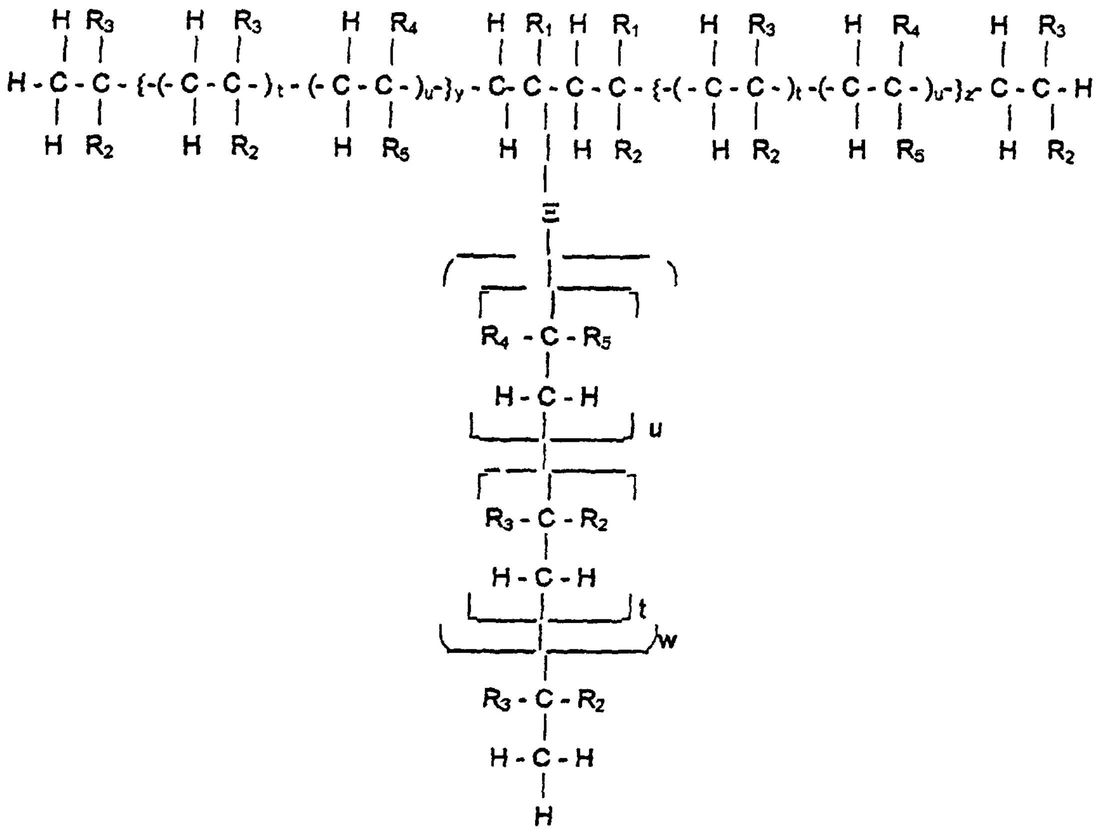

$R_1$ = $C_1$ bis $C_4$-Alkyl; $R_2$ = H; $R_3$ = $C_1$ bis $C_4$-Alkyl oder H; $R_4$ = H, $C_1$ bis $C_4$-Alkyl, Halogen oder Aryl, insbesondere Phenyl; $R_5$ = H oder $C_1$ bis $C_4$-Alkyl; y + z = 150 bis 3000; t / u = 0,03 bis 30; w = 250 bis 5000
Ξ = Polymere Brückensegmente auf Basis von Acrylsäure , $C_4$- bis $C_{12}$- Acrylsäurederivaten, $C_3$- bis $C_{21}$-Allylverbindungen, $C_8$- bis $C_{14}$-Diacrylaten, $C_7$- bis $C_{18}$-Diallylverbindungen, $C_4$- bis $C_{10}$- Dienen, $C_9$- bis $C_{15}$- Dimethacrylaten, $C_7$- bis $C_{10}$-Divinylverbindungen, Monovinylverbindungen ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methytvinylpyridin, 4-Phenoxystyren, Pheny(viny(ether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin,

Vinyloctadecylether, Vinyloctylether, N-Vinytoxazolidon, Vinylpelargonat, o-Vinylphenol, Vinylphenyldimethytsilan, Vinylphenylether, Vinylphenylketon, 5-Vinylpicolin, Vinylpropionat, N-Vinylpyridin, N-Vinylpyrrolidon, Vinylstearat , Vinyltriethoxysilan, Vinyltrimethoxysilan, Vinyltris(trimethoxysiloxy)silan, Vinyltrimethylsilan; $C_{12}$- bis $C_{17}$- Polyacrylaten, $C_{15}$- bis $C_{21}$- Polymethacrylaten und/oder $C_9$- bis $C_{12}$- Triallylverbindungen sind, wobei der Anteil der polymeren Brückensegmente in den Poly(alkylethylenen) mit H- oder Y-Struktur 0,1 bis 5 Masse% beträgt.

**2.** Poly(alkylethylene) mit H - und Y - Struktur nach Anspruch 1, **dadurch gekennzeichnet, daß** die Polyalkylethylene mit H - und Y - Struktur durch folgende Strukturkombinationen mit den Substituenten $R_1$ bis $R_5$ definiert werden :

a) $R_1 = R_3 = R_4 = C_2H_5$ und $R_2 = R_5 = H$

b) $R_1 = R_3 = C_2H_5$, $R_2 = R_4 = R_5 = H$ und t/u = 1,2 bis 30

c) $R_1 = R_3 = R_4 = i\text{-}C_4H_9$ und $R_2 = R_5 = H$

d) $R_1 = R_3 = i\text{-}C_4H_9$, $R_2 = R_4 = R_5 = H$ und t/u = 1,2 bis 30

e) $R_1 = R_3 = i\text{-}C_4H_9$, $R_2 = R_5 = H$ , $R_4 = n\text{-} C_4H_9$ und t/u = 0,03 bis 3

f) $R_1 = R_3 = R_4 = CH_3$ and $R_2 = R_5 = H$

g) $R_1 = R_3 = CH_3$, $R_2 = R_4 = R_5 = H$ und t/u = 1,2 bis 30

h) $R_1 = R_3 = CH_3$, $R_2 = R_5 = H$, $R_4 = Cl$ und t/u = 0,03 bis 5

**3.** Poly(alkylethylene) mit H - und Y - Struktur nach Anspruch 1 und 2, **dadurch gekennzeichnet, daß** die Poly (alkylethylene) mit H- und Y-Struktur Mischungen der Poly(alkylethylene) mit H - und Y - Struktur nach Anspruch 2 sind.

**4.** Poly(alkylethylene) mit H - und Y - Struktur nach einem oder mehreren der Ansprüche 1 bis 3, **dadurch gekennzeichnet, daß** der ψ - Index $2{,}5 \cdot 10^{-3}$ bis $6 \cdot 10^{-3}$ (kJ/mol·grd) beträgt.

**5.** Poly(alkylethylene) mit H - und Y - Struktur nach einem oder mehreren der Ansprüche 1 bis 4, **dadurch gekennzeichnet, daß** die polymeren Brückensegmente Ξ aus Sequenzen mit Monomereinheiten aus Monovinylverbindungen ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren , Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinytfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat, Vinyltriethoxysilan, Vinyltrimethoxysilan, Vinyltris (trimethoxysiloxy)sifan, Vinyltrimethylsilan zu Anteilen von 1,5 bis 5 Masse%; aus Sequenzen mit Monomereinheiten aus Divinylverbindungen zu Anteilen von o,1 bis 2 Masse%, aus Sequenzen mit Monomereinheiten aus Allylverbindungen zu Anteilen von 0,2 bis 4,5 Masse%, aus Sequenzen mit Monomereinheiten aus Diacrylaten zu Anteilen von 0,1 bis 1,6 Masse%, aus Sequenzen mit Monomereinheiten aus Polyacrylaten zu Anteilen von 0,1 bis 1,2 Masse%, aus Sequenzen mit Monomereinheiten aus Acrylsäure und/oder Acrylsäurederivaten zu Anteilen von 0,2 bis 1,8 Masse%, aus Sequen-zen mit Monomereinheiten aus Diallylverbindungen zu Anteilen von 0,2 bis 1,8 Masse%, aus Sequenzen mit Monomereinheiten aus Dimethacrylaten zu Anteilen von 0,1 bis 1,6 Masse % , aus Sequenzen mit Monomereinheiten aus Dienen zu Anteilen von 0,1 bis 1,6 Masse %, aus Sequenzen mit Monomereinheiten aus Poly-methacrylaten zu Anteilen von 0,1 bis 1,2 Masse% und/oder aus Sequenzen mit Monomereinheiten aus Triallylverbindungen zu Anteilen von 0,1 bis 1,4 Masse% bestehen.

6. Mischungen aus Poly(alkylethylenen), **dadurch gekennzeichnet, daß** die Mischungen aus 3 bis 97 % Poly(alkylethylenen) mit H- und Y-Struktur nach einem oder mehreren der Ansprüche 1 bis 5, 97 bis 3 % nichtmodifizierten Poly(alkylethylenen), 0,01 bis 0,6 Masse% phenolischen Antioxidantien, 0,01 bis 0,6% Verarbeitungsstabilisatoren auf Basis von Phosphiten, 0,01 bis 0,6 % Hochtemperaturstabilisatoren auf Basis von Disulfiden und Thioäthern und/oder 0,01 bis 0,8 % sterisch gehinderten Aminen (HALS) als übliche Hilfsstoffe und gegebenenfalls 0,1 bis 1% Antistatika, 0,2 bis 3 % Pigmenten, 0,05 bis 1% Nukleierungsmitteln, 5 bis 40 % Füllstoffen, 2 bis 20 % Flammschutzmitteln und/oder 0,001 bis 1% Verarbeitungshilfsmitteln bestehen und einen $\psi$ - Index von $2 \cdot 10^{-3}$ bis $7,8 \cdot 10^{-3}$ (RJ/mol·grd) besitzen.

7. Verfahren zur Herstellung von Poly(alkylethylenen) mit H - und Y - Struktur nach einem oder mehreren der Ansprüche 1 bis 5, **dadurch gekennzeichnet, daß** Poly($C_1$-bis $C_4$-alkylethylene) unter kontinuierlicher Prozeßführung,

- in einem ersten Reaktionsschritt als pulverförmige Mischungen mit 0,02 bis 5 Masse% Acrylsäure, Acrylsäurederivaten, Allylverbindungen, Diacrylaten, Diallylverbindungen, Dienen, Dimethacrylaten, Divinylverbindungen; Monovinylverbindungen ausgewählt aus der Liste bestehend aus p-Acetoxystyren, Aminostyren, tert. Butylstyren, Bromstyren, Chlorstyren, Dichlorstyren, m-Diethylaminoethylstyren, Diethylenglycolmonovinylether, Dimethoxystyren, Dimethylstyren, Ethoxystyren , Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon, Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat , Vinyltriethoxysilan, Vinyltrimethoxysilan, Vinyltris(trimethoxysiloxy)silan, Vinyltrimethylsilan; Polyacrylaten, Polymethacrylaten und/oder Triallylverbindungen in Wirbelschicht unter inerten Bedingungen bei 300 bis 500 K, gegebenenfalls in Gegenwart von 0,01 bis 0,6 Masse% phenolischen Antioxidantien, 0,01 bis 0,6 Masse% Hochtemperaturstabilisatoren auf Basis von Disulfiden und Polyäthern, 0,01 bis 0,6 % Verarbeitungsstabilisatoren auf Basis von Phosphiten und/ oder 0,01 bis 0,8% sterisch gehinderten Aminen (HALS), 0,1 bis 1% Antistatika, 0,2 bis 3% Pigmenten, 0,05 bis 1% Nukleierungsmitteln, 5 bis 40% Füllstoffen, 2 bis 20% Flammschutzmitteln und/oder 0,001 bis 1% Verarbeitungshilfsmitteln als übliche Hilfsstoffe, gegebenenfalls in Wirbelschichtreaktoren mit kontinuierlichem Produkteintrag und Produktaustrag, einer ionisierenden Strahlung einer Energie von 15o bis 1oooo keV bei einer Bestrahlungsdosis von o,5 bis 80 kGy durch Nuklidbestrahlungsanlagen mit Kobalt-60 als Strahlenquellen, durch Elektronenbeschleuniger vom Cockroft-Walton-Typ mit Strahlstromenergien von 300 bis 4500 keV oder durch Elektronenbeschleuniger vom Linearbeschleunigertyp mit Strahlstromenergien von 1ooo bis 1oooo keV, ausgesetzt werden, und

- in einem zweiten Reaktionsschritt eine thermische Behandlung der bestrahlten pulverförmigen Mischungen bei 38o bis 55o K in Extrudem bei Temperaturen im Bereich von 41o bis 55o K und bei Reaktionszeiten von 2 bis 1o Minuten oder in fester Phase bei Temperaturen im Bereich von 38o bis 5oo K bei Reaktionszeiten von 5 bis 6o Minuten erfolgt, wobei vor der thermischen Behandlung gegebenenfalls zusätzlich übliche Stabilisatoren in Konzentrationen von o,o1 bis o,6% zugesetzt werden können.

8. Verfahren zur Herstellung von Poly(alkylethylenen) mit H- und Y-Struktur nach einem oder mehreren der Ansprüche 1 bis 5, **dadurch gekennzeichnet, dass** Poly($C_1$- bis $C_4$-alkylethylene) in der Schmelze im Extruder unter inerten Bedingungen,

- in einer ersten Reaktionsstufe mit 0,01 bis 3 Masse% Acylperoxiden, Alkylperoxiden, Hydroperoxiden und/ oder Perestern, die entweder im Innenmischer auf die Poly(alkylethylene) aufgetrommelt und gemeinsam dosiert werden oder als Lösung in die Pol(alkylethylen)-Schmelze in Zone 2 bis 4 des Extruders dosiert werden, zur Umsetzung gebracht werden, und

- in einer zweiten Reaktionsstufe mit 0,01 bis 5 Masse% Acrylsäure bzw. Acrylsäurederivaten, Allylverbindungen, Diacrylaten, Diallylverbindungen, Dienen, Dimethacrylaten, Divinylverbindungen, Monovinylverbindungen ausgewählt aus der Liste bestehend aus p-Acetoxystyren, Aminostyren, tert.Butylstyren, Bromstyren, Chlorstyren, Dichlorstyren, m-Diethylaminoethylstyren, Diethylenglycolmonovinylether, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinylmethyldiethoxysilan, Vinylmethylether, Vinylmethylketon Vinylnaphthalin, Vinyloctadecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat, Vinyltriethoxysilan, Vinyltrimethoxysilan, Vinyltris(trimethoxysiloxy)silan, Vinyltrimethylsilan; Polymethacrylaten und/oder Triallylverbindungen in Gegenwart von 0,001 bis 3,0 Masse% Acylperoxiden, Alkylperoxiden, Hydroperoxiden und/oder Perestern, und gegebenenfalls von 0,01 bis 0,6 Masse% phenolischen Antioxidantien, 0,01 bis 0,6 Masse% Hochtemperaturstabilisatoren auf Basis von Disulfiden und Polyäthern, 0,01 bis 0,6 % Verarbeitungsstabilisatoren auf Basis von Phosphiten und/oder 0,01 bis 0,8 % sterisch gehinderten Aminen (HALS), 0,1 bis 1 % Antistatika, 0,2 bis 3 % Pigmenten, 0,05 bis 1 % Nukleierungsmitteln, 5 bis 40 % Füllstoffen, 2 bis 20 % Flammschutzmitteln und/oder 0,001 bis 1 % Verarbeitungshilfsmitteln als übliche Hilfsstoffe bei Temperaturen von 140 bis 320 °C zur Umsetzung gebracht werden, wobei Radikalbildner und Monomere über getrennte Dosiereinrichtungen und/oder gemeinsam als Lösung in die Poly(alkylethylen)-Schmelze in Zone 3 bis 6 des Extruders, gegebenenfalls mit einem weiteren Poly(alkylethylen)-Anteil, dosiert werden.

**9.** Verfahren zur Herstellung von Poly(alkylethylenen) mit H- und Y-Struktur nach einem oder mehreren der Ansprüche 1 bis 5, **dadurch gekennzeichnet, dass** Poly($C_1$- bis $C_4$-alkylethylene) unter kontinuierlicher Prozessführung, als feinteilige Pulver unter inerten Bedingungen,

- in der ersten Verfahrensstufe bei 290 K bis 500 K in Reaktoren mit Umwälzeinrichtungen und Kreislaufträgergasführung einer Sorption mit 0,05 bis 3 Masse% Acylperoxiden, Alkylperoxiden, Hydroperoxiden und/oder Perestern sowie 0,05 bis 5 Masse% Acrylsäure, Acrylsäurederivaten, Allylverbindungen, Diacrylaten, Diallylverbindungen, Dienen, Dimethacrylaten, Divinylverbindungen, Monovinylverbindungen ausgewählt aus der Liste bestehend aus p-Acetoxystyren, Aminostyren, tert. Butylstyren, Bromstyren, Chlorstyren, Dichlorstyren, m-Diethylaminoethylstyren, Diethylenglycolmonovinylether, Dimethoxystyren, Dimethylstyren, Ethoxystyren, Ethylstyren, Ethylvinylacetat, Ethylvinylether, Ethylvinylpyridin, Fluorstyren, 2-Hydroxybutylstyren, 2-Hydroxypropylstyren, m-Hydroxystyren, Isopropylstyren, Methoxystyren, Methylchlorstyren, Methylchlorstyren, alpha-Methylstyren, m-Methylstyren, p-Methylstyren, Methylvinylacetat, Methylvinylether, Methylvinylpyridin, 4-Phenoxystyren, Phenylvinylether, Styren, Trimethoxystyren, Trimethylstyren, Vinylacetat, Vinylacetoxymethylketon, Vinyladipat, 9-Vinylanthracen, Vinylbenzoat, Vinylbutylether, Vinylbutylketon, Vinylbutyrat, Vinylcarbazol, Vinylcyanoacetat, Vinyldodecylether, Vinylethyldiethoxysilan, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethyldiacetoxysilan, Vinyloctedecylether, Vinyloctylether, N-Vinyloxazolidon, Vinylpelargonat, o-Vinylphenol, Vinylphenyldimethylsilan, Vinylphenylether, Vinylphenylketon, 5-Vinylpicolin, Vinylpropionat, N-Vinylpyridin, N-Vinylpyrrolidon, Vinylstearat, Vinyltriethoxysilan, Vinyltrimethoxysilan, Vinyltris-(trimethoxysiloxy)silan, Vinyltrimethylsilan; Polyacrylaten, Polymethacrylaten und/oder Triallylverbindungen, die über Verdampfungseinrichtungen in den Trägergasstrom eingebracht wurden, unterzogen werden, und

- in einer zweiten Verfahrensstufe die pulverförmige Mischung, gegebenenfalls unter Zusatz von 0,01 bis 2,5 % Stabilisatoren, 0,1 bis 1 % Antistatika, 0,2 bis 3 % Pigmenten, 0,05 bis 1 % Nukleierungsmitteln, 5 bis 40 % Füllstoffen, 2 bis 20 % Flammschutzmitteln und/oder 0,001 bis 1 % Verarbeitungshilfsmitteln als übliche Hilfsstoffe, in der Einzugszone von Schneckenmaschinen,
  insbesondere von Doppelschneckenextrudern oder Einschneckenextrudem mit Plungerschnecke; auf die Zerfallstemperatur des Radikalbildners erwärmt und nachfolgend bei Reaktionstemperaturen von 415 K bis 595 K aufgeschmolzen und granuliert wird.

**10.** Verfahren zur Herstellung von Poly(alkylethylenen) mit H - und Y - Struktur nach einem oder mehreren der Ansprüche 7 - 9, **dadurch gekennzeichnet, daß** als Poly(alkylethylene) Poly(ethylethylene) mit Glastemperaturen

von 242 bis 250 K und Molmassen ($M_w$ ) im Bereich von $2 \cdot 10^4$ bis $3 \cdot 10^6$, Poly(ethylethylen-co-ethylen)-Copolymere mit Ethylen-Anteilen im Copolymer von 3 bis 45 Mol %, Poly(ethylethylen-co-methylethylen)-Copolymere mit einem Methylethylen-Anteil im Copolymer von 3 bis 97 Mol %, Poly(isobutylethylene) mit Glastemperaturen von 295 bis 303 K und Dichten im Bereich von 0,813 bis 0,832 g/cm$^3$ bei 25°C, Poly(isobutylethylen-co-n-butylethylen)-Copolymere mit einem n-Butylethylenanteil von 3 bis 97 Mol %, Poly(isobutylethylen-co-ethylen)-Copolymere mit einem Ethylenanteil im Copolymer von 3 bis 45 Mol%, Poly(methylethylene) mit Glastemperaturen im Bereich von 259 bis 266 K und Molmassen ($M_w$) im Bereich von $1 \cdot 10^5$ bis $8 \cdot 10^6$ und/oder Poly(methylethylen-co-ethylen)-Copolymere mit einem Ethylenanteil im Copolymer von 3 bis 45 Mol % eingesetzt werden.

**11.** Anwendung von Poly(alkylethylenen) mit H - und Y - Struktur nach einem oder mehreren der Ansprüche 1 bis 5 sowie von Mischungen nach Anspruch 6 zur Herstellung von Folien, Platten, Beschichtungen, Rohren, Hohlkörpern und Schaumstoffen.

## Claims

**1.** Poly(alkylethylenes) having H and Y structures and a ψ index of 2 x $10^{-3}$ to 8 x $10^{-3}$ (kJ/mol·deg), wherein

$$\psi = Tm \cdot \Delta Hm \cdot \beta \cdot \zeta \cdot Tg^{-1} \text{ (kJ / mol} \cdot \text{deg)}$$

Tm = melting temperature (K)
ΔHm = melting heat (kJ/mol)
β = coefficient of linear thermal expansion at 25°C (1 / deg)
ζ = threshold value (billet diameter of poly(alkylethylene) with H and Y structure / billet diameter of unmodified poly(alkylethylene) when MFI is determined in accordance with ISO 1131)
Tg = glass temperature (K),

poly(alkylethylenes) with an H structure are macromers of the following structure

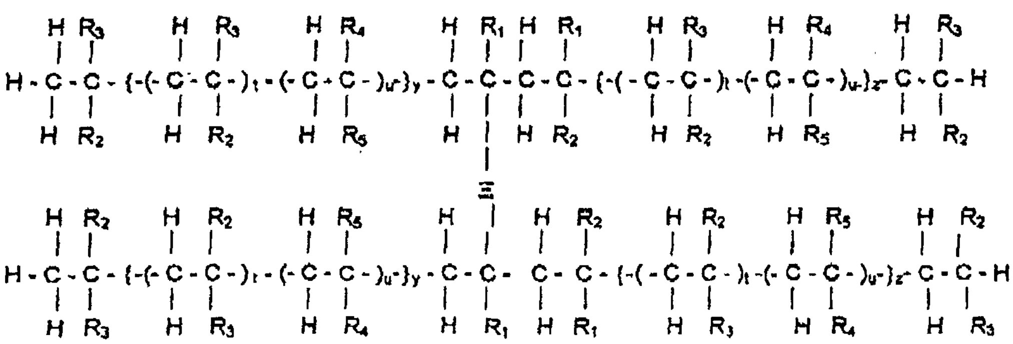

$R_1$ = $C_1$- to $C_4$-alkyl; $R_2$ = H; t/u = 0.03 to 30; $R_3$ = $C_1$- to $C_4$-alkyl or H; $R_4$ =H, $C_1$- to $C_4$-alkyl, halogen or aryl, especially phenyl; $R_5$ = H or $C_1$- to $C_4$-alkyl; y+z = 150 to 3000
Ξ are polymeric bridge segments based on acrylic acid, $C_4$- to $C_{12}$-acrylic acid derivatives, $C_3$- to $C_{21}$-allyl compounds, $C_8$- to $C_{14}$-diacrylates, $C_7$- to $C_{16}$-diallyl compounds, $C_4$- to $C_{10}$-dienes, $C_9$-to $C_{15}$-dimethacrylates, $C_7$ to $C_{10}$-divinyl compounds, monovinyl compounds selected from the list consisting of p-acetoxystyrene, aminostyrene, tert.butylstyrene, bromostyrene, chlorostyrene, dichlorostyrene, m-diethylaminoethyl styrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropyistyrene, m-hydroxystyrene, isopropylstyrene, methoxystyrene, methylchlorostyrene, alpha-methylstyrene, m-methylstyrene, p-methylstyrene, methylvinylacetate, methylvinylether, methylvinylpyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutyl ether, vinylbutyl ketone, vinylbutyrate, vinylcarbazole, vinylcyanoacetate, vinyldodecyl ether, vinylethyldiethoxysilane, vinylethyl ether, vinylethylenglycolglycidyl ether, vinylethylhexyl ether, vinylethyl ketone, vinylformate, vinylfurane, vinylhexylether, vinylimidazole, vinylisobutylether, vinylisocyanate, vinylisopropyl ether, vinylisopropyl ketone, vinyllaurate, vinylmethyldiacetoxysilane, vinylmethyldiethoxysilane, vinylmethyl ether, vinylmethyl ketone, vinylnaphthaline, vinyloctadecyl ether, vinyloctyl ether , N-vinyloxazolidone, vinylpelargonate, o-vinylphenol, vinylphenyldimethylsilane, vinylphenylether, vinylphenyl ketone, 5-vinylpicoline, vinylpropionate, N-vinylpyridine, N-vinylpyrrolidone, vinylstearate , vinyltriethoxysilane, vinyltrimethoxysilane, vinyltris(trimethoxysiloxy)silane, vinyltrimethylsilane; $C_{12}$- to $C_{17}$-polyacrylates, $C_{15}$- to $C_{21}$-polymethacrylates and/or $C_9$- to $C_{12}$-triallyl compounds

and poly(alkylethylenes) with a Y structure are macromers of the following structure

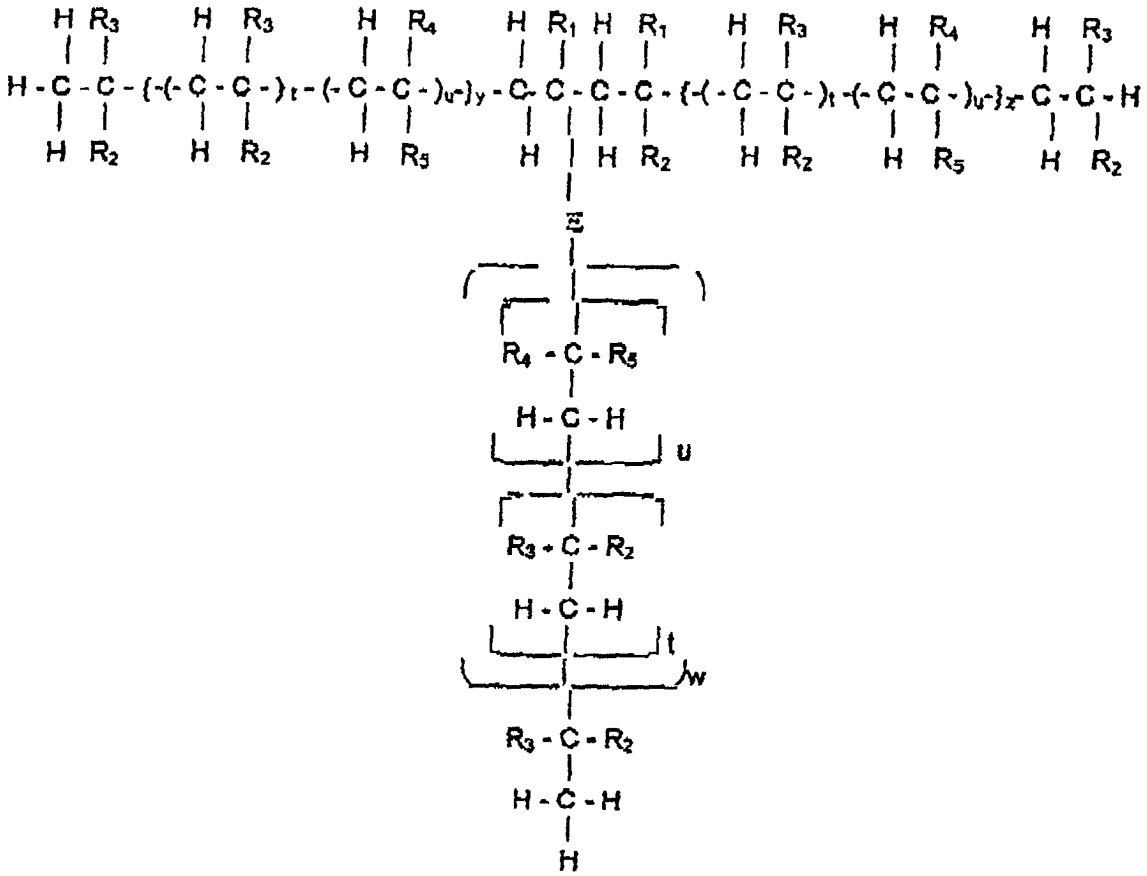

$R_1$ = $C_1$- to $C_4$-alkyl; $R_2$ = H; $R_3$ = $C_1$- to $C_4$-alkyl or H; $R_4$ =H, $C_1$- to $C_4$-alkyl, halogen or aryl, especially phenyl; $R_5$ = H or $C_1$- to $C_4$-alkyl; y+z = 150 to 3000; t/u = 0.03 to 30; w = 250 to 5000

Ξ are polymeric bridge segments based on acrylic acid, $C_4$- to $C_{12}$-acrylic acid derivatives, $C_3$- to $C_{21}$-allyl compounds, $C_8$- to $C_{14}$-diacrylates, $C_7$- to $C_{16}$-diallyl compounds, $C_4$- to $C_{10}$-dienes, $C_9$-to $C_{15}$-dimethacrylates, $C_7$ to $C_{10}$-divinyl compounds, monovinyl compounds selected from the list consisting of p-acetoxystyrene, aminostyrene, tert.butylstyrene, bromostyrene, chlorostyrene, dichlorostyrene, m-diethylaminoethyl styrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropylstyrene, m-hydroxystyrene, isopropylstyrene, methoxystyrene, methylchlorostyrene, alpha-methylstyrene, m-methylstyrene, p-methylstyrene, methylvinylacetate, methylvinylether, methylvinylpyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutyl ether, vinylbutyl ketone, vinylbutyrate, vinylcarbazole, vinylcyanoacetate, vinyldodecyl ether, vinylethyldiethoxysilane, vinylethyl ether, vinylethylenglycolglycidyl ether, vinylethylhexyl ether, vinylethyl ketone, vinylformate, vinylfurane, vinylhexylether, vinylimidazole, vinylisobutylether, vinylisocyanate, vinylisopropyl ether, vinylisopropyl ketone, vinyllaurate, vinylmethyldiacetoxysilane, vinylmethyldiethoxysilane, vinylmethyl ether, vinylmethyl ketone, vinylnaphthaline, vinyloctadecyl ether, vinyloctyl ether , N-vinyloxazolidone, vinylpelargonate, o-vinylphenol, vinylphenyldimethylsilane, vinylphenylether, vinylphenyl ketone, 5-vinylpicoline, vinylpropionate, N-vinylpyridine, N-vinylpyrroiidone, vinylstearate , vinyltriethoxysilane, vinyltrimethoxysilane, vinyltris(trimethoxysiloxy)silane, vinyltrimethylsilane; $C_{12}$- to $C_{17}$-polyacrylates, $C_{15}$- to $C_{21}$-polymethacrylates and/or $C_9$- to $C_{12}$-triallyl compounds

and wherein the content of polymeric bridge segments in the poly(alkylethylenes) with an H or Y structure is 0.1 to 5 percent by weight.

**2.** Poly(alkylethylenes) with H and Y structures according to claim 1 wherein said polyalkylethylenes with H and Y structures are defined by the following structural combinations of the substituents R1 to R3:

a) R1 = R3 = R4 = C2H5 and R2= R5 = H
b) R1 = R3 = C2H5, R2= R4 = R5 = H and t/u = 1.2 to 30
c) R1 = R3 = R4 = i-C4H9 and R2 = R5 = H
d) R1 = R3 = i-C4H9, R2 = R4 = R5 = H and t/u 1.2 to 30
e) R1 = R3= i-C4H9, R2 = R5 = H , R4 = n- C4H9 and t/u = 0.03 to 3
f) R1 = R3 = R4 = CH3 and R2= R5 = H
g) R1 =R3= CH3, R2 = R4 = R5 = H and t/u =1.2 to 30
h) R1 = R3= CH3. R2 = R5 = H, R4 = Cl and t/u = 0.03 to 5

**3.** Poly(alkylethylenes) with H and Y structures according to claims 1 and 2, wherein said poly(alkylethylenes) with H and Y structures are mixtures of poly(alkylethylenes) with H and Y structures according to claim 2.

**4.** Poly(alkylethylenes) with H and Y structures according to one or several of the preceding claims 1 through 3, **characterized in that** their ψ index is 2.5 x 103 to 6 x 103 (kJ/mol deg).

**5.** Poly(alkylethylenes) with H and Y structures according to one or several of the preceding claims 1 through 4 wherein the polymeric bridge segments consist of chunk segments of 1.5 to 5 percent by weight of sequences with monomeric units of monovinyl compounds selected from the list consisting of p-acetoxystyrene, aminostyrene, tert.butylstyrene, bromostyrene, chlorostyrene, dichlorostyrene, m-diethylaminoethylstyrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropylstyrene, m-hydroxystyrene, isopropylstyrene, methoxystyrene, methylchlorstyrene, alpha-methylstyrene, m-methylstyrene, p-methylstyrene, methylvinyl acetate, methylvinyl ether, methylvinyl pyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutylether, vinylbutylketone, vinylbutyrate, vinylcarbazole, vinylcyanoacetate, vinyldodecyl ether, vinylethyldiethoxysilane, vinylethyl ether, vinylethyleneglycolglycidyl ether, vinylethylhexyl ether, vinylethylketone, vinylformate, vinylfurane, vinylhexyl ether, vinylimidazole, vinylisobutyl ether, vinylisocyanate, vinylisopropyl ether, vinylisopropylketone, vinyllaurat, vinylmethyldiacetoxysilane, vinylmethyldiethoxysilane, vinylmethyl ether, vinylmethylketone, vinylnaphthaline, vinyloctadecyl ether, vinyloctyl ether , N-vinyloxazolidone, vinylpelargonate, o-vinylphenol, vinylphenyldimethylsilane, vinylphenylether, vinylphenylketone, 5-vinylpicoline, vinylpropionate, N-vinylpyridine, N-vinylpyrrolidone, vinylstearate, vinyltriethoxysilane, vinyltrimethoxysilane, vinyltris(trimethoxysiloxy)silane, vinyltrimethylsilane; 0.1 to 2 percent by weight of sequences of monomeric units of divinyl compounds, 0.2 to 4.5 percent by weight of sequences of monomeric units of allyl compounds, 0.1 to 1.6 percent by weight of sequences of monomeric units of diacrylates, 0.1 to 1.2 percent by weight of sequences of monomeric units of polyacrylates, 0.2 to 1.8 percent by weight of sequences of monomeric units of acrylic acid and/or acrylic acid derivatives, 0.2 to 1.8 percent by weight of sequences of monomeric units of diallyl compounds, 0.1 to 1.6 percent by weight of sequences of monomeric units of dimethacrylates, 0.1 to 1.6 percent by weight of sequences of monomeric units of dienes, 0.1 to 1.2 percent by weight of sequences of monomeric units of polymethacrylates and/or 0.1 to 1.4 percent by weight of sequences of monomeric units of triallyl compounds.

**6.** Mixtures of poly(alkylethylenes) consisting of 3 to 97 % of poly(alkylethylenes) with H and Y structures according to one or several of the preceding claims 1 through 5, 97 to 3% of unmodified poly(alkylethylenes), 0.01 to 0.6 percent by weight of phenolic antioxidants, 0.01 to 0.6% of processing stabilizers based on phosphites, 0.01 to 0.6% of high-temperature stabilizers based on disulfides and thio ethers and/or 0.01 to 0,8% of sterically hindered amines (HALS) as common adjuvants and optionally 0.1 to 1% of antistatics, 0.2 to 3% of pigments, 0,05 to 1% of nucleating agents, 5 to 40% of fillers, 2 to 20% of flame retardants and/or 0.001 to 1% of processing aids and having a ψ index of 2 x 10-3 to 7.8 x 10-3 (kJ/mol deg).

**7.** A method of producing poly(alkylethylenes) with H and Y structures according to one or several of the preceding claims 1 through 5 wherein in continuous operation, poly(C1- bis C4-alkylethylenes)- in the form of powdered mixtures with 0.02 to 5 percent by weight of acrylic acid, acrylic acid derivats, allyl compounds, diacrylates, diallyl

compounds, dienes, dimethacrylates, divinyl compounds; monovinyl compounds selected from the list consisting of p-acetoxystyrene, aminostyrene, tert.butylstyrene, bromostyrene, chlorostyrene, dichlorostyrene, m-diethylaminoethylstyrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropylstyrene, m-hydroxystyrene, isopropylstyrene, methoxystyrene, methylchlorstyrene, alpha-methylstyrene, m-methylstyrene, p-methylstyrene, methylvinyl acetate, methylvinyl ether, methylvinyl pyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutylether, vinylbutylketone, vinylbutyrate, vinylcarbazole, vinylcyanoacetate, vinyldodecyl ether, vinylethyldiethoxysilane, vinylethyl ether, vinylethyleneglycolglycidyl ether, vinylethylhexyl ether, vinylethylketone, vinylformate, vinylfurane, vinylhexyl ether, vinylimidazole, vinylisobutyl ether, vinylisocyanate, vinylisopropyl ether, vinylisopropylketone, vinyllaurat, vinylmethyldiaoetoxysilane, vinylmethyldiethoxysilane, vinylmethyl ether, vinylmethylketone, vinylnaphthaline, vinyloctadecyl ether, vinyloctyl ether , N-vinyloxazolidone, vinylpelargonate, o-vinylphenol, vinylphenyldimethylsilane, vinylphenylether, vinylphenylketone, 5-vinylpicoline, vinylpropionate, N-vinylpyridine, N-vinylpyrrolidone, vinylstearate, vinyltriethoxysilane, vinyltrimethoxysilane, vinyltris(trimethoxysiloxy)silane, vinyltrimethylsilane; polyacrylates, polymethacrylates and/or triallyl compounds are exposed in fluidized bed under inert conditions at 300 to 500 K, optionally in the presence of 0.01 to 0.6 percent by weight of phenolic antioxidants, 0.01 to 0.6% of high-temperature stabilizers based on disulfides and thio ethers, 0.01 to 0.6% of processing stabilizers based on phosphites, and/or 0.01 to 0,8% of sterically hindered amines (HALS), 0.1 to 1% of antistatics, 0.2 to 3% of pigments, 0,05 to 1% of nucleating agents, 5 to 40% of fillers, 2 to 20% of flame retardants and/or 0.001 to 1% of processing aids as common adjuvants, optionally in fluidized-bed reactors with continuous product feed and discharge, are exposed in a first reactive process stage to ionizing radiation at energy levels ranging from 150 to 10000 keV and an exposure of 0.5 to 80 kGy using nuclide irradiators with a cobalt-60 radiation source, or using Cockroft-Walton electron accelerators with beam current energies ranging from 300 to 4500 keV, or linear electron accelerators with beam current energies ranging from 1000 to 10000 keV, and - thermal treatment of the powdered mixtures irradiated at 380 to 550 K in extruders at temperatures ranging from 410 to 550 K and reaction times of 2 to 10 minutes, or in solid phase at temperatures ranging from 380 to 500 K and reaction times of 5 to 60 minutes, in a second reactive process stage, while common stabilizers may be added prior to thermal treatment at levels ranging from 0.01 to 0.6%.

**8.** A method of producing poly(alkylethylenes) with H and Y structures according to one or several of the preceding claims 1 through 5 wherein poly(C1- to C4-alkylethylenes) in the melt in an extruder and under inert conditions

- are reacted in a first reactive process stage with 0.01 to 3 percent by weight of acylperoxides, alkylperoxides, hydroperoxides and/or peresters that are either tumbled with the poly(alkylethylenes) in an internal mixer and charged into the extruder together, or are added as a solution to the poly(alkylethylene) melt in zones 2 to 4 of the extruder, and
- are reacted in a second reactive process stage with 0.02 to 5 percent by weight of acrylic acid, acrylic acid derivats, allyl compounds, diacrylates, diallyl compounds, dienes, dimethacrylates, divinyl compounds; monovinyl compounds selected from the list consisting of p-acetoxystyrene, aminostyrene, tert.butylstyrene, bromostyrene, chlorostyrene, dichlorostyrene, m-diethylaminoethylstyrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropylstyrene, m-hydroxystyrene, isopropylstyrene, methoxystyrene, methylchlorstyrene, alphamethylstyrene, m-methylstyrene, p-methylstyrene, methylvinyl acetate, methylvinyl ether, methylvinyl pyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutylether, vinylbutylketone, vinylbutyrate, vinylcarbazole, vinylcyanoacetate, vinyldodecyl ether, vinylethyldiethoxysilane, vinylethyl ether, vinylethyleneglycolglycidyl ether, vinylethylhexyl ether, vinylethylketone, vinylformate, vinylfurane, vinylhexyl ether, vinylimidazole, vinylisobutyl ether, vinylisocyanate, vinylisopropyl ether, vinylisopropylketone, vinyllaurat, vinylmethyldiacetoxysilane, vinylmethyldiethoxysilane, vinylmethyl ether, vinylmethylketone, vinylnaphthaline, vinyloctadecyl ether, vinyloctyl ether , N-vinyloxazolidone, vinylpelargonate, o-vinylphenol, vinylphenyldimethylsilane, vinylphenylether, vinylphenylketone, 5-vinylpicoline, vinylpropionate, N-vinylpyridine, N-vinylpyrrolidone, vinylstearate, vinyltriethoxysilane, vinyltrimethoxysilane, vinyltris (trimethoxysiloxy)silane, vinyltrimethylsilane; polymethacrylates and/or triallyl compounds are exposed with 0,001 to 3 percent by weight of acylperoxids, alkylperoxids, hydroxyperoxids and/or peresters present in fluidized bed under inert conditions at 300 to 500 K, optionally in the presence of 0.01 to 0.6 percent by weight of phenolic antioxidants, 0.01 to 0.6% of high-temperature stabilizers based on disulfides and thio ethers, 0.01 to 0.6% of processing stabilizers based on phosphites, and/or 0.01 to 0,8% of sterically hindered amines (HALS), 0.1 to 1% of antistatics, 0.2 to 3% of pigments, 0,05 to 1% of nucleating agents, 5 to 40% of fillers, 2

to 20% of flame retardants and/or 0.001 to 1% of processing aids as common adjuvants at temperatures ranging from 140 to 320°C, and wherein radical-forming agents and monomers are added to the poly(alkylethylene) melt either using separate feeders and/or jointly as a solution in zones 3 to 6 of the extruder, optionally with another part of poly(alkylethylene).

**9.** A method of producing poly(alkylethylenes) with H and Y structures according to one or several of the preceding claims 1 through 5 wherein poly(C1- to C4-alkylethylenes) in the form of fine-grained powders, in continuous operation and under inert conditions, are in a first reactive process stage subjected to a sorption of 0.05 to 3 percent by weight of acylperoxides, alkylperoxides, hydroperoxides and/or peresters as well as 0.05 to 5 percent by weight of acrylic acid, acrylic acid derivatives, allyl compounds, diacrylates, diallyl compounds, dienes, dimethacrylates, divinyl compounds, monovinyl compounds selected from the list consisting of p-acetoxystyrene, aminostyrene, tert.butylstyrene, bromostyrene, chlorostyrene, dichlorostyrene, m-diethylaminoethyl styrene, diethyleneglycol monovinylether, dimethoxystyrene, dimethylstyrene, ethoxystyrene, ethylstyrene, ethylvinylacetate, ethylvinyl ether, ethylvinyl pyridine, fluorostyrene, 2-hydroxybutylstyrene, 2-hydroxypropylstyrene, m-hydroxystyrene, isopropylstyrene, methoxystyrene, methylchlorostyrene, alpha-methylstyrene, m-methylstyrene, p-methylstyrene, methylvinylacetate, methylvinylether, methylvinylpyridine, 4-phenoxystyrene, phenylvinyl ether, styrene, trimethoxystyrene, trimethylstyrene, vinylacetate, vinylacetoxymethylketone, vinyladipate, 9-vinylanthracene, vinylbenzoate, vinylbutyl ether, vinylbutyl ketone, vinylbutyrate, vinylcarbazole, vinylcyanoacetate, vinyldodecyl ether, vinylethyldiethoxysilane, vinylethyl ether, vinylethylenglycolglycidyl ether, vinylethylhexyl ether, vinylethyl ketone, vinylformate, vinylfurane, vinylhexylether, vinylimidazole, vinylisobutylether, vinylisocyanate, vinylisopropyl ether, vinylisopropyl ketone, vinyllaurate, vinylmethyldiacetoxysilane, vinyloctadecyl ether, vinyloctyl ether , N-vinyloxazolidone, vinylpelargonate, o-vinylphenol, vinylphenyldimethylsilane, vinylphenylether, vinylphenyl ketone, 5-vinylpicoline, vinylpropionate, N-vinylpyridine, N-vinylpyrrolidone, vinylstearate , vinyltriethoxysilane, vinyltrimethoxysilane, vinyltris(trimethoxysiloxy)silane, vinyltrimethylsilane; polyacrylates, polymethacrylates and/or triallyl compounds introduced via evaporators into the carrier gas stream in reactors with carrier gas circuits and circulators at temperatures ranging from 290 K to 500 K, and

- in a second process stage, the powdered mixture is heated to the decomposition temperature of the radical-forming agent of 415 K to 595 K, melted and granulated, optionally adding 0.01 to 2.5% of stabilizers, 0.1 to 1% of antistatics, 0.2 to 3% of pigments, 0.05 to 1% of nucleating agents, 5 to 40 % of fillers, 2 to 20 % of flame retardants and/or 0.001 to 1 % of processing aids as common adjuvants, in the feeding zone of screw-type machines, particularly twin-screw extruders or single-screw extruders with plunger.

**10.** A method of producing poly(alkylethylenes) with H and Y structures according to one or several of the preceding claims 7 through 9, wherein the poly(alkylethylenes) used are poly(ethylethylenes) with glass temperatures ranging from 242 to 250 K and molar weights (MW ) ranging from 2 x 104 to 3 x 106, poly(ethylethylene-co-ethylene)-copolymers with ethylene portions in the copolymer ranging from 3 to 45 mole percent, poly(ethylethylene-co-methylethylene) copolymers with methylethylene portions in the copolymer ranging from 3 to 97 mole percent,
poly(isobutylethylenes) with glass temperatures ranging from 295 to 303 K and densities ranging from 0.813 to 0.832 g/cm3 at 25°C, poly(isobutylethylene-co-n-butylethylene) copolymers with a n-butylethylene portion from 3 to 97 mole percent,
poly(isobutylethylene-co-ethylene) copolymers with an ethylene portion in the copolymer ranging from 3 to 45 mole percent, poly(methylethylene) with glass temperatures ranging from 259 to 266 K and molar weights (Mw) ranging from 1 x 105 to 8 x 108 and/or poly(methylethylene-co-ethylene) copolymers with an ethylene portion in the copolymer ranging from 3 to 45 mole percent.

**11.** Use of poly(alkylethylenes) with H and Y structures according to one or several of the preceding claims 1 through 6 as well as mixtures according to claim 6 for producing films, sheets, coatings, pipes, hollow bodies and foams.

## Revendications

**1.** Poly(alkyléthylènes), **caractérisés en ce que** les poly(alkyléthylènes) possèdent des structures H et Y et un indice $\psi$ allant de $2.10^{-3}$ à $8.10^{-3}$ (kJ/mole.degré), où

$$\psi = Tm \,.\, \Delta Hm \cdot \beta \cdot \zeta \cdot Tv^{-1} \text{ (kJ/mole.degré)}$$

Tm = température de fusion (K)
ΔHm = chaleur de fusion (kJ/mole)
β = coefficient d'allongement thermique linéaire à 25°C (1/degré)
ζ = valeur de gonflement (diamètre du brin de poly(alkyléthylène) avec des structures H et Y/diamètre du brin de poly(alkyléthylène) non modifié par la détermination de la fluidité (MFI) d'après ISO 1131)
Tv = température de transition vitreuse (K),

les poly(alkyléthylènes) de structure H étant le macromère de structure :

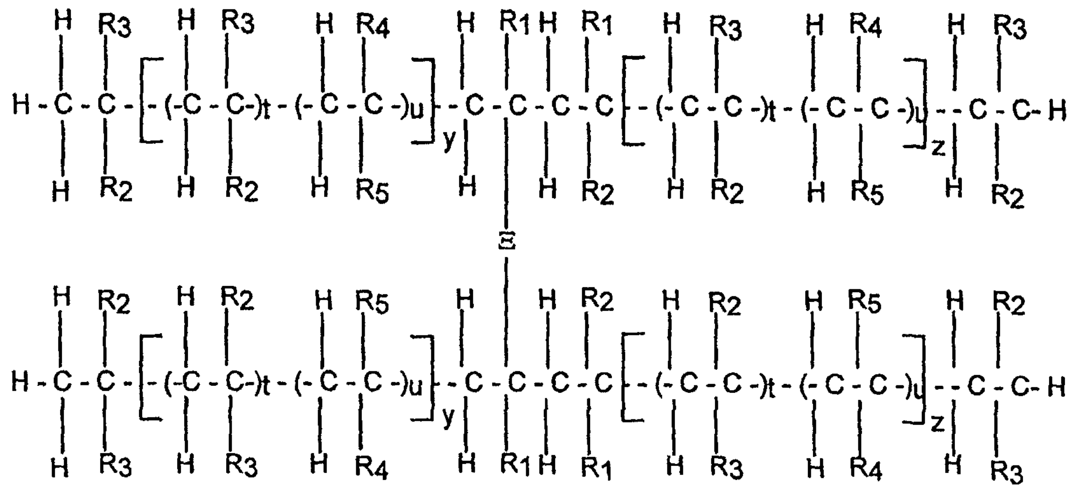

$R_1$ = alkyle en $C_1$-$C_4$, $R_2$ = H ; t/u = 0,03 à 30 ; $R_3$ = alkyle en $C_1$-$C_4$ ou H, $R_4$ = H, alkyle en $C_1$-$C_4$ halogène ou aryle, en particulier phényle ; $R_5$ = H ou alkyle en $C_1$-$C_4$, y+z = 150 à 3000
Ξ = segment pontant les polymères, à base d'acide acrylique, de dérivés en $C_4$ à $C_{12}$ de l'acide acrylique, de composés allyle en $C_3$ à $C_{21}$, de diacrylates en $C_8$ à $C_{14}$, de composés diallyle en $C_7$ à $C_{16}$, de diènes en $C_4$ à $C_{10}$, de diméthacrylates en $C_9$ à $C_{15}$, de composés divinyle en $C_7$ à $C_{10}$, de composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène, l''éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène, le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinylméthyldiéthoxysilane, le vinylméthyléther, la vinylméthylcétone, le vinyinaphtalène, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane ; de polyacrylates en $C_{12}$ à $C_{17}$, de polyméthacrylates en $C_{15}$ à $C_{21}$ et/ou de composés triallyle en $C_9$-$C_{12}$ ;
et les poly(alkyléthylènes) de structure Y étant le macromère de structure :

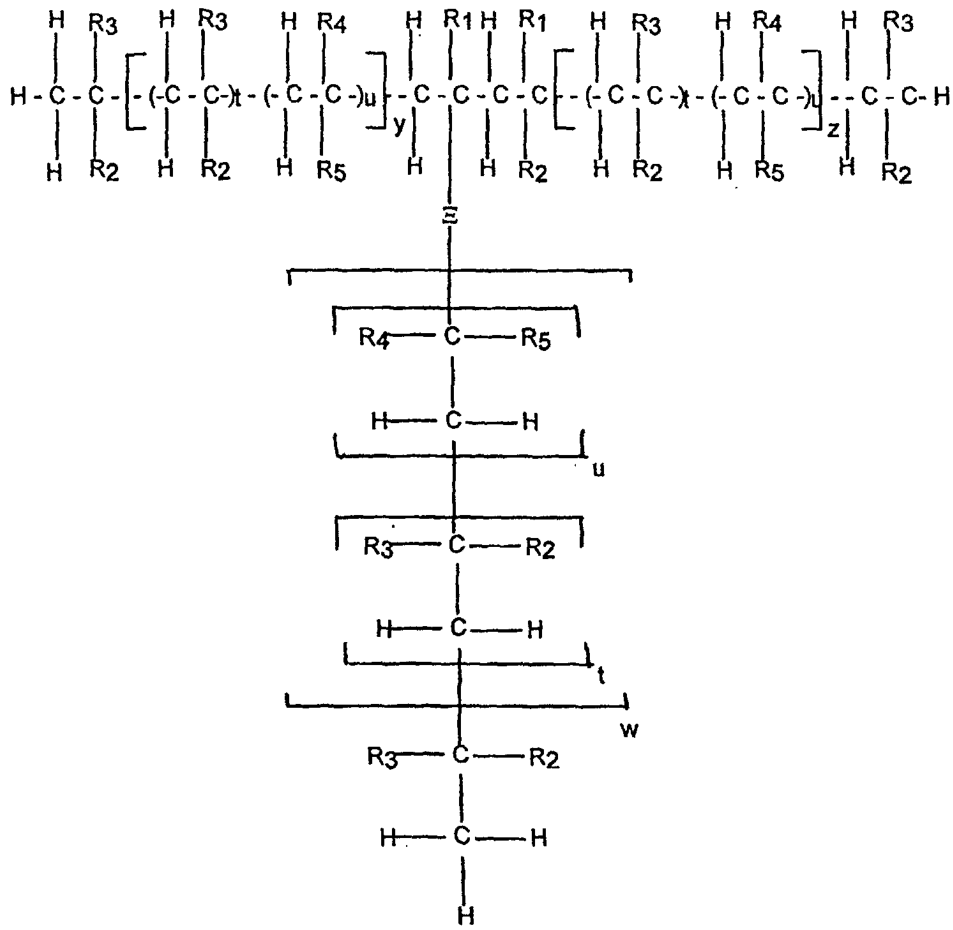

$R_1$ = alkyle en $C_1$-$C_4$, $R_2$ = H ; $R_3$ = alkyle en $C_1$-$C_4$ ou H, $R_4$ = H, alkyle en $C_1$-$C_4$ halogène ou aryle, en particulier phényle ; $R_5$ = H ou alkyle en $C_1$-$C_4$, y+z = 150 à 3000 ; t/u = 0,03 à 30 ; w = 250 à 5000 ;
Ξ = segment pontant les polymères, à base d'acide acrylique, de dérivés en $C_4$ à $C_{12}$ de l'acide acrylique, de composés allyle en $C_3$ à $C_{21}$, de diacrylates en $C_8$ à $C_{14}$, de composés diallyle en $C_7$ à $C_{16}$, des diènes en $C_4$ à $C_{10}$, de diméthacrylates en $C_9$ à $C_{15}$, de composés divinyle en $C_7$ à $C_{10}$, de composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène l'éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène, le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinylméthyldiéthoxysilane, le vinylméthyléther, la vinylméthylcétone, le vinylnaphtalène, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane ; de polyacrylates en $C_{12}$ à $C_{17}$, de polyméthacrylates en $C_{15}$ à $C_{21}$ et/ou de composés triallyle en $C_9$-$C_{12}$ ;
où la proportion des segments pontant les polymères dans les poly(alkyléthylènes) avec les structures H ou Y s'élève de 0,1 à 5% en poids.

2. Poly(alkyléthylènes) avec les structures H et Y selon la revendication 1, **caractérisés en ce que** les poly(alkyléthylènes) avec les structures H et Y sont définis par les combinaisons suivantes, de structures avec les substituants $R_1$ à $R_5$ :

a) $R_1 = R_3 = R_4 = C_2H_5$ et $R_2 = R_5 = H$
b) $R_1 = R_3 = C_2H_5$ et $R_2 = R_4 = R_5 = H$ et t/u = 1,2 à 30
c) $R_1 = R_3 = R_4 = i\text{-}C_4H_9$ et $R_2 = R_5 = H$
d) $R_1 = R_3 = i\text{-}C_4H_9$ et $R_2 = R_4 = R_5 = H$ et t/u = 1,2 à 30
e) $R_1 = R_3 = i\text{-}C_4H_9$ et $R_2 = R_5 = H$, $R_4 = n\text{-}C_4H_9$ et t/u = 0,03 à 3
f) $R_1 = R_3 = R_4 = CH_3$ et $R_2 = R_5 = H$
g) $R_1 = R_3 = CH_3$ et $R_2 = R_4 = R_5 = H$ et t/u = 1,2 à 30
h) $R_1 = R_3 = CH_3$ et $R_2 = R_5 = H$, $R_4 = Cl$ et t/u = 0,03 à 5

**3.** Poly(alkyléthylènes) avec les structures H et Y selon les revendications 1 et 2, **caractérisés en ce que** les poly (alkyléthylènes) avec les structures H et Y sont des mélanges de poly(alkyléthylènes) avec les structures H et Y selon la revendication 2.

**4.** Poly(alkyléthylènes) avec les structures H et Y selon l'une ou plusieurs des revendications 1 à 3, **caractérisés en ce que** l'indice $\psi$ s'élève de $2{,}5.10^{-3}$ à $6.10^{-3}$ (kJ/mole.degré).

**5.** Poly(alkyléthylènes) avec les structures H et Y selon l'une ou plusieurs des revendications 1 à 4, **caractérisés en ce que** le segment pontant les polymères $\Xi$ consiste en des séquences avec des unités monomères constituées des composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène, l'éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène, le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinylméthyldiéthoxysilane, le vinylméthyléther, la vinylméthylcétone, le vinylnaphtalène, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane en des proportions de 1,5 à 5% en masse ; en des séquences d'unités monomères constituées de composés divinyliques en des proportions de 0,1 à 2% en masse ; en des séquences d'unités monomères constituées de composés allyle en des proportions de 0,2 à 4,5% en masse ; en des séquences d'unités monomères constituées de composés diacrylates en des proportions de 0,1 à 1,6% en masse ; en des séquences d'unités monomères constituées de polyacrylates en des proportions de 0,1 à 1,2% en masse ; en des séquences d'unités monomères constituées d'acide acrylique et/ou de dérivés de l'acide acrylique en des proportions de 0,2 à 1,8% en masse ; en des séquences d'unités monomères constituées de composés diallyliques en des proportions de 0,2 à 1,8% en masse ; en des séquences d'unités monomères constituées de composés diméthacrylates en des proportions de 0,1 à 1,6% en masse ; en des séquences d'unités monomères constituées de diènes en des proportions de 0,1 à 1,6% en masse ; en des séquences d'unités monomères constituées de polyméthacrylates en des proportions de 0,1 à 1,2% en masse, et/ou en des séquences d'unités monomères constituées de composés triallyliques en des proportions de 0,1 à 1,4% en masse ;

**6.** Mélanges de poly(alkyléthylènes), **caractérisés en ce que** les mélanges consistent en 3 à 97% de poly(alkyléthylènes) de structures H et Y selon l'une ou plusieurs des revendications 1 à 5, 97 à 3% de poly(alkyléthylènes) non modifiés, 0,01 à 0,6% en masse d'antioxydants phénoliques, 0,01 à 0,6% de stabilisants de traitement à base de phosphites, 0,01 à 0,6% de stabilisants à haute température à base de disulfures et de thioéthers et/ou 0,01 à 0,8% d'amines stériquement encombrées (HALS) comme auxiliaires usuels et le cas échéant, 0,1 à 1% d'antistatiques, 0,2 à 3% de pigments, 0,05 à 1% d'agents de nucléation, 5 à 40% de charges, 2 à 20% d'agents de protection contre les flammes et/ou 0,001 à 1% d'auxiliaires de traitement et possèdent un indice $\psi$ allant de $2.10^{-3}$ à $7{,}8.10^{-3}$ (kJ/mole.degré).

**7.** Procédé de préparation de poly(alkyléthylènes) de structures H et Y selon l'une ou plusieurs des revendications 1 à 5, **caractérisé en ce que** l'on expose des poly(alkyl en $C_1$-$C_4$)éthylènes, par un procédé continu,

- dans une première étape de réaction, sous la forme de mélange pulvérulents avec 0,02 à 5% en masse d'acide acrylique, de dérivés de l'acide acrylique, de composés allyle, de diacrylates, de composés diallyle, de diènes, de diméthacrylates, de composés divinyle, de composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène 1'éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène, le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinylméthyldiéthoxysilane, le vinylméthyléther, la vinylméthylcétone, le vinylnaphtalène, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane ; de polyacrylates, de polyméthacrylates et/ou de composés triallyle, dans un lit fluidisé dans des conditions inertes de 300 à 500 K, le cas échéant en présence de 0,01 à 0,6% en masse d'antioxydants phénoliques, 0,01 à 0,6% de stabilisants à haute température à base de disulfures et de polyéthers, 0,01 à 0,6% de stabilisants de traitement à base de phosphites et/ou 0,01 à 0,8% d'amines stériquement encombrées (HALS), 0,1 à 1% d'antistatiques, 0,2 à 3% de pigments, 0,05 à 1% d'agents de nucléation, 5 à 40% de charges, 2 à 20% d'agents de protection contre les flammes et/ou 0,001 à 1% d'auxiliaires de traitement comme auxiliaires usuels, le cas échéant dans des réacteurs à lit fluidisé avec introduction et extraction continues des produits, à un rayonnement ionisant d'une énergie allant de 150 à 10 000 keV, à une dose d'irradiation de 0,5 à 80 kGy par des installations d'irradiation par nuclides avec du cobalt-60 comme source de rayonnement, par un accélération d'électrons du type Cockroft-Walton avec des énergies de rayonnement de 300 à 4500 keV ou par un accélérateur d'électrons du type accélérateur linéaire avec des énergies de rayonnement allant de 1000 à 10 000 keV, et
- dans une deuxième étape de réaction, on réalise un traitement thermique des mélanges pulvérulents irradiés de 380 à 550 K dans des extrudeuses à des températures situées dans la gamme allant de 410 à 550 K et des périodes de réaction allant de 2 à 10 minutes ou en phase solide à des températures allant de 380 à 500 K pendant des périodes de réaction allant de 5 à 60 minutes, où avant le traitement thermique, on peut ajouter le cas échéant, des stabilisants usuels supplémentaires en des concentrations allant de 0,01 à 0,6%.

**8.** Procédé de préparation de poly(alkyléthylènes) de structures H et Y selon l'une ou plusieurs des revendications 1 à 5, **caractérisé en ce que** l'on fait réagir des poly(alkyl en $C_1$-$C_4$)éthylènes, dans la masse fondue dans une extrudeuse dans des conditions inertes,

- dans une première étape de réaction, avec 0,01 à 3% en masse d'acylperoxydes, alkylperoxydes, hydroperoxydes et/ou peresters, qui sont ajoutés dans un mélangeur interne aux poly(alkyléthylènes) et y incorporés ou ajoutés sous la forme d'une solution, à la masse fondue des poly(alkyléthylènes) dans les zones 2 à 4 de l'extrudeuse, et
- dans une deuxième étape de réaction, on fait réagir avec 0,01 à 5% en masse d'acide acrylique ou de dérivés de l'acide acrylique, de composés allyle, de diacrylates, de composés diallyle, de diènes, de diméthacrylates, de composés divinyle, de composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène, l'éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène,

le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinylméthyldiéthoxysilane, le vinylméthyléther, la vinylméthylcétone, le vinylnaphtalène, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane ; de polyméthacrylates et/ou de composés triallyle, en présence de 0,001 à 3,0% en masse d'acylperoxydes, d'alkylperoxydes, d'hydroperoxydes et/ou de peresters, et le cas échéant de 0,01 à 0,6% en masse d'antioxydants phénoliques, 0,01 à 0,6% de stabilisants à haute température à base de disulfures et de polyéthers, 0,01 à 0,6% de stabilisants de traitement à base de phosphites et/ou 0,01 à 0,8% d'amines stériquement encombrées (HALS), 0,1 à 1% d'antistatiques, 0,2 à 3% de pigments, 0,05 à 1% d'agents de nucléation, 5 à 40% de charges, 2 à 20% d'agents de protection contre les flammes et/ou 0,001 à 1% d'auxiliaires de traitement comme auxiliaires usuels, à des températures allant de 140 à 320°C, où l'agent de formation de radicaux et les monomères sont ajoutés par des dispositifs de dosages séparés et/ou ensemble, sous la forme d'une solution, à la masse fondue des poly(alkyléthylènes) dans les zones 3 à 6 de l'extrudeuse le cas échéant avec une quantité supplémentaire de poly(alkyléthylène).

**9.** Procédé de préparation de poly(alkyléthylènes) de structures H et Y selon l'un ou plusieurs des revendications 1 à 5, **caractérisé en ce que** l'on soumet des poly(alkyl en $C_1$-$C_4$)éthylènes, dans un procédé continu, comme une poudre fine, dans des conditions inertes,

- dans une première étape de procédé, de 290 K à 500 K, dans des réacteurs avec des dispositifs de laminage et recyclage du gaz porteur, à une sorption avec 0,05 à 3% en masse d'acylperoxydes, alkylperoxydes, hydroperoxydes et/ou peresters, ainsi que 0,05 à 5% en masse d'acide acrylique, de dérivés de l'acide acrylique, de composés allyle, de diacrylates, de composés diallyle, de diènes, de diméthacrylates, de composés divinyle, de composés monovinyliques choisis parmi la liste consistant en le p-acétoxystyrène, l'aminostyrène, le t-butylstyrène, le bromostyrène, le chlorostyrène, le dichlorostyrène, le m-diéthylaminoéthylstyrène, le diéthylèneglycolmonovinyléther, le diméthoxystyrène, le diméthylstyrène, l'éthoxystyrène, l'éthylstyrène, l'acétate d'éthylvinyle, l'éthylvinyléther, l'éthylvinylpyridine, le fluorostyrène, le 2-hydroxybutylstyrène, le 2-hydroxypropylstyrène, le m-hydroxystyrène, l'isopropylstyrène, le méthoxystyrène, le méthylchlorostyrène, l'alpha-méthylstyrène, le m-méthylstyrène, le p-méthylstyrène, l'acétate de méthylvinyle, le méthylvinyléther, la méthylvinylpyridine, le 4-phénoxystyrène, le phénylvinyléther, le styrène, le triméthoxystyrène, le triméthylstyrène, l'acétate de vinyle, la vinylacétoxyméthylcétone, l'adipate de vinyle, le 9-vinylanthracène, le benzoate de vinyle, le vinylbutyléther, la vinylbutylcétone, le butyrate de vinyle, le vinylcarbazole, le cyanoacétate de vinyle, le vinyldodécyléther, le vinyléthyldiéthoxysilane, le vinyléthyléther, le vinyléthylèneglycolglycidyléther, le vinyléthylhexyléther, la vinyléthylcétone, le formiate de vinyle, le vinylfuranne, le vinylhexyléther, le vinylimidazole, le vinylisobutyléther, l'isocyanate de vinyle, le vinylisopropyléther, la vinylisopropylcétone, le laurate de vinyle, le vinylméthyldiacétoxysilane, le vinyloctadécyléther, le vinyloctyléther, la N-vinyloxazolidone, le pelargonate de vinyle, le o-vinylphénol, le vinylphényldiméthylsilane, le vinylphényléther, la vinylphénylcétone, la 5-vinylpicoline, le propionate de vinyle, la N-vinylpyridine, le N-vinylpyrrolidone, le stéarate de vinyle, le vinyltriéthoxysilane, le vinyltriméthoxysilane, le vinyltris(triméthoxysiloxy)silane, le vinyltriméthylsilane ; de polyacrylates, de polyméthacrylates et/ou de composés triallyle, qui sont introduits dans le gaz porteur par des dispositifs de vaporisation, et
- dans une deuxième étape de procédé, le mélange pulvérulent, le cas échant avec addition de 0,01 à 2,5% de stabilisants, 0,1 à 1% d'antistatiques, 0,2 à 3% de pigments, 0,05 à 1% d'agents de nucléation, 5 à 40% de charges, 2 à 20% d'agents de protection contre les flammes et/ou 0,001 à 1% d'auxiliaires de traitement comme auxiliaires usuels, dans la zone d'introduction des extrudeuses, en particulier des extrudeuses à vis double

ou des extrudeuses à vis simple avec vis à piston ; on chauffe à la température de décomposition de l'agent de formation de radicaux, et ensuite, on fait fondre et on granule à des températures de réaction allant de 415 K à 595 K.

**10.** Procédé de préparation de poly(alkyléthylènes) de structures H et Y, selon l'une ou plusieurs des revendications 7 à 9, **caractérisé en ce que** l'on met en oeuvre comme poly(alkyléthylène), des poly(éthyléthylènes) ayant des

températures de transition vitreuse allant de 242 à 250 K et des masses molaires ($M_w$) dans l'intervalle allant de $2.10^4$ à $3.10^6$, des copolymères poly(éthyléthylène-co-éthylène) avec des proportions d'éthylène dans le copolymère allant de 3 à 45% en moles, des copolymères poly(éthyléthylène-co-méthyléthylène) avec une proportion de méthyléthylène dans le copolymère allant de 3 à 97% en moles, des poly(isobutyléthylènes) ayant des températures de transition vitreuse allant de 295 à 303 K et des masses spécifiques situées dans l'intervalle allant de 0,813 à 0,832 g/$cm^3$ à 25°C, des copolymères poly(isobutyléthylène-co-n-butyléthylène) avec une proportion de n-butyléthylène allant de 3 à 97% en moles, des copolymères poly(isobutyléthylène-co-éthylène) avec une proportion d'éthylène dans le copolymère allant de 3 à 45% en moles, des poly(méthyléthylènes) ayant des températures de transition vitreuse allant de 259 à 266 K et des masses molaires ($M_w$) dans l'intervalle allant de $1.10^5$ à $8.10^6$ et/ou des copolymères poly(méthyléthylène-co-éthylène) avec une proportion d'éthylène dans le copolymère allant de 3 à 45% en moles.

**11.** Utilisation de poly(alkyléthylènes) de structures H et Y, selon l'une ou plusieurs des revendications 1 à 5, ainsi que des mélanges selon la revendication 6, pour la préparation de feuilles, plaques, revêtements, tubes, corps creux et mousses.